# EUROPEAN PATENT APPLICATION

(11) **EP 4 819 355 A1**
(43) Date of publication of application: **07.10.2026**
(21) Application number: 24963734.9
(22) Date of filing: 20.12.2024
(51) Int. Cl.: H01M 50/502, H01M 50/569, H01M 10/48

(54) **BATTERY DEVICE AND ELECTRIC DEVICE**

(71) Applicant: Contemporary Amperex Technology Co., Limited, Ningde, Fujian 352100 (CN)
(72) Inventor: LIU, Shaozhong, Ningde, Fujian 352100 (CN); YE, Jianpeng, Ningde, Fujian 352100 (CN); GAN, Weifeng, Ningde, Fujian 352100 (CN); ZHENG, Chenling, Ningde, Fujian 352100 (CN); KANG, Hairong, Ningde, Fujian 352100 (CN)
(74) Representative: Kraus & Lederer PartGmbB
(86) International application number: PCT/CN2024/141130
(87) International publication number: WO 2026/129322

(57) **Abstract**

The present application provides a battery apparatus (100) and an electrical apparatus, and relates to the technical field of batteries; the battery apparatus (100) includes at least one battery cell assembly (20), a signal acquisition assembly (40), and a battery monitoring module (50); the battery cell assembly (20) includes a plurality of battery cells (21) arranged along a first direction; the signal acquisition assembly (40) is configured to acquire information of the battery cells (21) of the battery cell assembly (20); the signal acquisition assembly (40) includes a wiring harness group (41) and a first connector (42); the first connector (42) is connected to one end of the wiring harness group (41); the battery monitoring module (50) is provided with a second connector (51); and the second connector (51) is in insertion fit with the first connector (42); the space occupied by the communication connection between the signal acquisition assembly (40) and the battery monitoring module (50) is reduced, the risk of sampling failure caused by interference and wear of the first connector (42) and the second connector (51) between a high-voltage box, a busbar component (30), and an inner wall of a box (10) of the battery apparatus (100) is reduced, the use reliability is improved, thereby improving the reliability of the battery apparatus (100); and moreover, the cost of the battery apparatus (100) can be reduced.

## Description

### TECHNICAL FIELD

The present application relates to the technical field of batteries, and particularly relates to a battery apparatus and an electrical apparatus.

### BACKGROUND

At present, battery apparatuses are widely used in electronic devices, vehicles, power tools, unmanned aerial vehicles, energy storage devices, and other fields. Therefore, higher requirements are put forward for the reliability of the battery apparatuses.

### SUMMARY OF THE INVENTION

The embodiments of the present application provide a battery apparatus and an electrical apparatus, aiming to improve the reliability of the battery apparatus.

In a first aspect, the embodiment of the present application provides the battery apparatus, which includes at least one battery cell assembly, a signal acquisition assembly, and a battery monitoring module; the battery cell assembly includes a plurality of battery cells arranged along a first direction; the signal acquisition assembly is configured to acquire information of the battery cells of the battery cell assembly; the signal acquisition assembly includes a wiring harness group and a first connector; the first connector is connected to one end of the wiring harness group; the battery monitoring module is provided with a second connector; and the second connector is in insertion fit with the first connector.

In the above technical solution, the signal acquisition assembly includes the first connector, the battery monitoring module is provided with the second connector, the first connector is in insertion fit with the second connector to realize communication connection between the signal acquisition assembly and the battery monitoring module, it is not needed to connect the signal acquisition assembly with the battery monitoring module through a wiring harness, thus the space occupied by the communication connection between the signal acquisition assembly and the battery monitoring module is reduced, the risk of sampling failure caused by interference and wear of the first connector and the second connector between a high-voltage box, a busbar component, and an inner wall of a box of the battery apparatus is reduced, the use reliability is improved, thereby improving the reliability of the battery apparatus; and moreover, the cost of the battery apparatus can be reduced. In addition, the insertion fit mode is simple and reliable, and the difficulty in assembling the battery apparatus can be reduced.

In some embodiments in the first aspect of the present application, the battery monitoring module and the battery cell assembly are arranged along the first direction; and along the first direction, the first connector and the second connector are positioned on a side of the battery cell assembly facing the battery monitoring module.

In the above technical solution, the first connector and the second connector are arranged on the side of the battery cell assembly facing the battery monitoring module, such that a connection distance from the first connector to the second connector can be reduced, the connection is facilitated, the space occupied by the first connector and the second connector is reduced, the energy density of the battery apparatus can be improved; and moreover, the risk of interference of the first connector and the second connector to other structures in the battery apparatus can be reduced, thus improving the reliability of the battery apparatus.

In some embodiments in the first aspect of the present application, along the first direction, the second connector is arranged on a side of the battery monitoring module facing the battery cell assembly.

In the above technical solution, the second connector is arranged on the side of the battery monitoring module facing the battery cell assembly, such that the second connector is closer to the first connector, which facilitates insertion of the first connector to the second connector, makes the internal structure of the battery apparatus more compact, and helps reducing the size of the battery apparatus as well as improving he energy density of the battery apparatus.

In some embodiments in the first aspect of the present application, along the first direction, at least part of the first connector is located between the battery monitoring module and the battery cell assembly; and in a projection plane perpendicular to the first direction, at least part of an orthographic projection of the first connector overlaps with at least part of the orthographic projections of the battery cells.

In the above technical solution, at least part of the first connector is located between the battery monitoring module and the battery cell assembly, and in the projection plane perpendicular to the first direction, at least part of the orthographic projection of the first connector overlaps with at least part of the orthographic projections of the battery cells, such that the first connector and the battery cells are overlapped in space, the space between the battery monitoring module and the battery cell assembly can be fully utilized by the first connector, the space occupied by the first connector and the second connector in other directions can be reduced, thereby reducing the size of the battery apparatus, and improving the energy density of the battery apparatus.

In some embodiments in the first aspect of the present application, an insertion direction of the first connector and the second connector is parallel to the first direction.

In the above technical solution, the insertion direction of the first connector and the second connector is parallel to the first direction, thus the space in the first direction in the battery apparatus can be fully utilized, the space occupied by the first connector and the second connector in other directions can be reduced, thereby reducing the size of the battery apparatus in other directions as well as reducing the size of the battery apparatus.

In some embodiments in the first aspect of the present application, the battery apparatus includes a box; the battery cell assembly is accommodated in the box; the box includes a box bottom wall, the box bottom wall supports the battery cell assembly along a second direction, and the second direction intersects with the first direction; and along the second direction, the second connector is arranged on a side of the battery monitoring module deviating from the box bottom wall.

In the above technical solution, the second connector is arranged on the side of the battery monitoring module deviating from the box bottom wall, which is conductive to fully utilize the space in the second direction in the battery apparatus, thereby reducing the space occupied by the first connector and the second connector in other directions, and reducing the size of the battery apparatus.

In some embodiments in the first aspect of the present application, the battery cell includes a shell and an electrode assembly; the electrode assembly is accommodated in the shell; and along the second direction, the shell is provided with a first surface deviating from the box bottom wall, and the battery monitoring module does not exceed the first surface along a direction deviating from the box bottom wall.

In the above technical solution, the battery monitoring module does not exceed the first surface along the direction deviating from the box bottom wall, such that the second connector and the first connector can be accommodated in a space on the side of the first surface of the box in the second direction, the space in the battery apparatus is fully utilized, thereby reducing the space occupied by the second connector in other directions, and reducing the size of the battery apparatus.

In some embodiments in the first aspect of the present application, the insertion direction of the first connector and the second connector is parallel to the second direction.

In the above technical solution, the insertion direction of the first connector and the second connector is parallel to the second direction, which facilitates the insertion of the first connector and the second connector, thereby reducing the space occupied by the first connector and the second connector in other directions except the second direction. Under the condition that the battery monitoring module does not exceed the first surface along the direction deviating from the box bottom wall, the first connector and the second connector can be accommodated in the space on the side of the first surface of the box in the second direction, such that the space in the battery apparatus is fully utilized, the space occupied by the second connector and the first connector in other directions is reduced, thereby reducing the size of the battery apparatus.

In some embodiments in the first aspect of the present application, the battery apparatus includes the box; the battery cell assembly is accommodated in the box; the box includes the box bottom wall; the box bottom wall supports the battery cell assembly along the second direction; the battery monitoring module is arranged on the box bottom wall; and the second direction intersects with the first direction.

In the above technical solution, the battery monitoring module is arranged on the box bottom wall, facilitating the arrangement of the battery monitoring module, and improving the stability of the battery monitoring module.

In some embodiments in the first aspect of the present application, the battery monitoring module and the battery cell assembly are arranged along the first direction; the wiring harness group includes a main body region and a connection region; the main body region is arranged on the side of the battery cell assembly deviating from the box bottom wall, and extends along the first direction; and the connection region exceeds the surface of the battery cell assembly facing the battery monitoring module along the first direction, and is connected to the first connector.

In the above technical solution, the connection region of the wiring harness group exceeds the surface of the battery cell assembly facing the battery monitoring module along the first direction, and is connected to the first connector, which facilitates the insertion of the first connector and a second connector; and the main body region of the wiring harness group is arranged on the side of the battery cell assembly deviating from the box bottom wall, which facilitates the signal acquisition assembly to acquire information of the battery cell.

In some embodiments in the first aspect of the present application, the battery apparatus further includes a partition beam; the partition beam is arranged in the box and connected to the box; the partition beam partitions the space in the box into a first space and a second space which are arranged along the first direction; and the battery monitoring module and the battery cell assembly are arranged in the first space and the second space, respectively.

In the above technical solution, the partition beam partitions the space in the box into the first space and the second space along the first direction, and the battery monitoring module and the battery cell assembly are arranged in the first space and the second space, respectively, therefore, the battery monitoring module and the battery cell assembly can be conveniently arranged, and the risk of interference between the battery monitoring module and the battery cell assembly is reduced.

In some embodiments in the first aspect of the present application, the battery apparatus further includes a locking member which is configured to lock the battery monitoring module on the box bottom wall.

In the above technical solution, the battery monitoring module is locked on the box bottom wall through the locking member, thereby improving the stability of the battery monitoring module.

In some embodiments in the first aspect of the present application, along the second direction, the battery monitoring module is provided with a second surface deviating from the box bottom wall, and the locking member is pressed on the second surface to lock the battery monitoring module to the box bottom wall.

In the above technical solution, the locking member is pressed on the second surface to lock the battery monitoring module to the box bottom wall, it is not needed to arrange a connecting member on the box bottom wall to lock the battery monitoring module to the box bottom wall, thus reducing the influence on the strength of the box.

In some embodiments in the first aspect of the present application, each battery monitoring module is correspondingly provided with two locking members, and the two locking members are arranged at an interval along a third direction; and the first direction and the second direction intersect with the third direction.

In the above technical solution, the battery monitoring module is locked to the box bottom wall through two locking members, thereby improving the stability of the battery monitoring module as well as the stress uniformity of the battery monitoring module.

In some embodiments in the first aspect of the present application, the battery monitoring module includes a first part and a second part; the first part is arranged on the box bottom wall; along the second direction, the surface of the first part deviating from the box bottom wall is the second surface; and the second part is connected to the second surface and protrudes out of the second surface, and the second connector is arranged on the second part.

In the above technical solution, the second part is connected to the second surface and protrudes out of the second surface, and the second connector is arranged on the second part, which facilitates the insertion fit between the second connector and the first connector.

In some embodiments in the first aspect of the present application, along the third direction, the second surface protrudes from both ends of the second part, and the first direction and the second direction intersect with the third direction.

In the above technical solution, the second surface protrudes from both ends of the second part along the third direction, which facilitates the locking member to press the second surface and to press the second surface from both sides of the second part along the third direction; the battery monitoring module can be jointly locked to the box bottom wall through at least two locking members, thereby improving the stability of the battery monitoring module and the stress uniformity of the battery monitoring module.

In some embodiments in the first aspect of the present application, the battery apparatus includes a plurality of signal acquisition assemblies which are arranged along the third direction, and the third direction intersects with the first direction; and each battery monitoring module is arranged corresponding to at least one signal acquisition assembly.

In the above technical solution, the battery apparatus includes the plurality of signal acquisition assemblies, so that the information of the battery cells of a plurality of battery cell assemblies can be synchronously acquired, and the information of the battery cells of the battery apparatus can be acquired in time.

In some embodiments in the first aspect of the present application, the battery apparatus includes a plurality of battery monitoring modules which are arranged along the third direction; and the first direction intersects with the third direction.

In the above technical solution, the battery apparatus includes the plurality of battery monitoring modules, thus the first connectors of the signal acquisition assemblies and the second connectors of the battery monitoring modules can be conveniently connected at a relatively short distance.

In some embodiments in the first aspect of the present application, at least one battery monitoring module is provided with a plurality of second connectors, and each second connector is in insertion fit with the first connector of one signal acquisition assembly.

In the above technical solution, at least one battery monitoring module is provided with the plurality of second connectors, and each second connector is in insertion fit with the first connector of one signal acquisition assembly, thus reducing the number of the battery monitoring modules of the battery apparatus, decreasing the cost, moreover, reducing the space occupied by the battery monitoring module, reducing the size of the battery apparatus, as well as improving the energy density of the battery apparatus.

In some embodiments in the first aspect of the present application, at least one battery monitoring module is provided with one second connector, and one second connector is in insertion fit with the first connector of one signal acquisition assembly.

In the above technical solution, at least one battery monitoring module is provided with one second connector, and one second connector is in insertion fit with the first connector of one signal acquisition assembly, thus facilitating the signal transmission between the signal acquisition assembly and the battery monitoring module.

In some embodiments in the first aspect of the present application, the at least one battery cell assembly includes a positive electrode conveying part and a negative electrode conveying part; the battery apparatus further includes the box, a first conductive structure, and a second conductive structure; the battery cell assembly is arranged in the box, the box is provided with a positive electrode lead-out part and a negative electrode lead-out part, the positive electrode lead-out part is connected to the positive electrode conveying part through the first conductive structure, and the negative electrode lead-out part is connected to the negative electrode conveying part through the second conductive structure; and an avoidance gap for the first conductive structure and the second conductive structure to pass through is formed between two adjacent battery monitoring modules.

In the above technical solution, the avoidance gap for the first conductive structure and the second conductive structure to pass through is formed between two adjacent battery monitoring modules, such that the risk of interference of the first conductive structure and the second conductive structure to the battery monitoring modules can be reduced, and the stability of electric energy transmission and the reliability of the battery apparatus are improved.

In some embodiments in the first aspect of the present application, the first connector is a male joint, the second connector is a female joint, and the first connector is inserted into the second connector.

In the above technical solution, the first connector is the male joint, the second connector is the female joint, and the first connector can be inserted into the second connector, thus facilitating the electrical connection between the first connector and the second connector.

In some embodiments in the first aspect of the present application, the first connector is in compression joint with the wiring harness group.

In the above technical solution, the first connector is in compression joint with the wiring harness group, thus the connection between the first connector and the wiring harness group is facilitated, and a relatively stable and reliable connection relationship is realized between the first connector and the wiring harness group. The first connector is in compression joint with the wiring harness group, which makes the connection more environment-friendly and low in cost.

In some embodiments in the first aspect of the present application, the first connector is in welding connection with the wiring harness group.

In the above technical solution, the first connector is in welding connection with the wiring harness group, thus the connection between the first connector and the wiring harness group has relatively good stability, the integrity of the first connector and the wiring harness group is good, and a relatively large external force can be borne.

In some embodiments in the first aspect of the present application, the first connector is in insertion fit with the wiring harness group.

In the above technical solution, the first connector is in insertion fit with the wiring harness group, so that the connection between the first connector and the wiring harness group is simple and convenient.

In some embodiments in the first aspect of the present application, the first connector includes an insertion part and a connection terminal, the connection terminal is connected to the wiring harness group, and both ends of the insertion part are in insertion fit with the connection terminal and the second connector, respectively.

In the above technical solution, both ends of the insertion part are in insertion fit with the connection terminal and the second connector, respectively, thus facilitating the connection between the first connector and the second connector, as well as the connection between the first connector and the wiring harness group.

In some embodiments in the first aspect of the present application, the wiring harness group includes an insulating plate and a plurality of wires; one part of each wire is buried in the insulating plate, and the other part of each wire is exposed out of the insulating plate and is connected to the first connector; and the signal acquisition assembly includes a plurality of acquisition members, and each acquisition member is connected to at least one wire.

In the above technical solution, one part of each wire is buried in the insulating plate, and the other part of each wire is exposed out of the insulating plate and is connected to the first connector, such that the risk of information acquisition failure caused by mutual winding of the wires is reduced, and moreover, the wires are separated by the insulating plate, thereby reducing the risk of short circuit, and improving the reliability of the battery apparatus.

In some embodiments in the first aspect of the present application, the wiring harness group includes insulating layers and the plurality of wires, and each insulating layer coats the periphery of at least one wire; the signal acquisition assembly includes the plurality of acquisition members, and both ends of the wires are respectively connected to the acquisition members and the first connector; and each acquisition member is connected to at least one wire.

In the above technical solution, each insulating layer coats the periphery of at least one wire, so that the wires are separated by the insulating layers, the risk of short circuit is reduced, and the reliability of the battery apparatus is improved.

In some embodiments in the first aspect of the present application, the battery apparatus includes a plurality of battery cell assemblies which are arranged along the third direction, and the first direction intersects with the third direction; and each battery cell assembly is correspondingly provided with one signal acquisition assembly.

In the above technical solution, the battery apparatus is provided with the plurality of battery cell assemblies, so that the energy density of the battery apparatus is high. Each battery cell assembly is correspondingly provided with one signal acquisition assembly, thus the information of the battery cell of each battery cell assembly can be conveniently acquired, and the information of the battery cell can be accurately and timely acquired, thereby providing reliable reference data for ensuring the reliability of the battery apparatus.

In a second aspect, the embodiment of the present application provides the electrical apparatus, and the electrical apparatus includes the battery apparatus provided by any embodiment in the first aspect.

In the above technical solution, the battery apparatus provided by any embodiment in the first aspect has high reliability, so that the power utilization reliability of the electrical apparatus powered by the battery apparatus can be improved.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a structural schematic diagram of a vehicle provided by some embodiments of the present application;
FIG. 2 is an exploded view of a battery apparatus provided by some embodiments of the present application;
FIG. 3 is a local schematic diagram of a battery apparatus provided by some embodiments of the present application; and
FIG. 4 is an exploded view of a battery cell provided by some embodiments of the present application;
FIG. 5 is a partial view of a battery apparatus provided by some embodiments of the present application;
FIG. 6 is a view of a battery apparatus along a first direction according to some embodiments of the present application;
FIG. 7 is a view of a battery apparatus along a third direction according to some embodiments of the present application;
FIG. 8 is a schematic structural diagram of a battery monitoring module according to some embodiments of the present application;
FIG. 9 is a schematic structural diagram of a battery monitoring module provided according to still yet other embodiments of the present application;
FIG. 10 is a partial schematic structural diagram of a battery apparatus according to some other embodiments of the present application;
FIG. 11 is an enlarged view of A in FIG. 10;
FIG. 12 is a schematic diagram of a battery apparatus along a third direction according to some other embodiments of the present application;
FIG. 13 is a schematic structural diagram of a battery monitoring module according to yet other embodiments of the present application;
FIG. 14 is a schematic structural diagram of a battery monitoring module according to yet other embodiments of the present application;
FIG. 15 is a schematic diagram of a battery apparatus along a third direction according to yet other embodiments of the present application;
FIG. 16 is a schematic diagram of a battery apparatus along a first direction according to still yet other embodiments of the present application;
FIG. 17 is a schematic diagram of a battery monitoring module and a locking member after fitting according to some embodiments of the present application;
FIG. 18 is a schematic structural diagram of a battery monitoring module according to some other embodiments of the present application;
FIG. 19 is an exploded view of a first connector and a second connector according to some embodiments of the present application;
FIG. 20 is an exploded view of a first connector and a second connector according to yet other embodiments of the present application;
FIG. 21 is a schematic structural diagram of a connecting terminal according to some embodiments of the present application;
FIG. 22 is a schematic diagram of a connecting terminal and a wiring harness group after crimping according to some embodiments of the present application;
FIG. 23 is a schematic diagram of a first connector and a second connector without insertion (the first connector is welded to the wiring harness group) according to yet other embodiments of the present application;
FIG. 24 is a schematic diagram of a first connector and a second connector without insertion (the first connector is welded to the wiring harness group) according to still yet other embodiments of the present application;
FIG. 25 is a schematic diagram of a first connector and a second connector without insertion (the first connector is welded to the wiring harness group) according to some other embodiments of the present application;
FIG. 26 is a schematic structural diagram of a wiring harness group according to some embodiments of the present application;
FIG. 27 is a partial schematic structural diagram of a signal acquisition assembly according to yet other embodiments of the present application;
FIG. 28 is a schematic diagram of a first connector and a second connector without insertion according to yet other embodiments of the present application; and
FIG. 29 is a schematic diagram of a first connector and a second connector after insertion according to some other embodiments of the present application.

Reference numerals: 1000-vehicle; 100-electrical apparatus; 10-box; 11-first box body; 12-second box body; 121-box bottom wall; 122-box side wall; 20-battery cell assembly; 21-battery cell; 211-shell; 2111-case; 21111-opening; 2112-end cover; 2113-first surface; 212-electrode assembly; 213-electrode terminal; 214-current collecting member; 22-positive electrode conveying part; 23-negative electrode conveying part; 30-busbar component; 40-signal acquisition assembly; 41-wiring harness group; 411-main body region; 412-connection region; 413-insulating plate; 414-wire; 415-insulating layer; 41a-columnar structure; 42-first connector; 421-insertion part; 422-connection terminal; 43-acquisition member; 50-battery monitoring module; 51-second connector; 511-inserting hole; 52-first end surface; 53-second end surface; 54-second surface; 55-first part; 56-second part; 60-partition beam; 70-locking member; 80-first conductive structure; 90-second conductive structure; 200-motor; 300-controller; X-first direction; Y-second direction; Z-third direction; Q1-first direction; Q2-second space; and Q3-avoiding gap.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like.

The battery cell generally includes an electrode assembly. The electrode assembly includes a positive electrode, a negative electrode, and a spacer. During charge-discharge of the battery cell, active ions (e.g., lithium ions) are intercalated and de-intercalated back and forth between the positive electrode and the negative electrode. The spacer is arranged between the positive electrode and the negative electrode, so that the risk of short circuit of the positive electrode and the negative electrode can be reduced, and moreover, the active ions can pass.

In some embodiments, the positive electrode can be a positive electrode plate, and the positive electrode plate may include a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material layer is provided on either or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon-fine electrode, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene glycol terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, it is not limited to these materials in the present application, other traditional materials which can be used as the positive electrode active material of the battery cell can also be adopted. These positive electrode active materials can be independently used, or more than two are combined to use. The example of the lithium-containing phosphate may include but is not limited to at least one of a group consisting of lithium iron phosphate (such as LiFePO₄ (LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. The examples of the lithium transition metal oxides may include, but are not limited to at least one of lithium cobalt oxides (e.g., LiCoO₂), lithium nickel oxides (e.g., LiNiO₂), lithium-manganese oxides (e.g., LiMnO₂, LiMn₂O₄), lithium nickel cobalt oxides, lithium manganese cobalt oxides, lithium nickel manganese oxides (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (can also be abbreviated as NCM₆₂₂), LiNi_{0.8}Co_{0.1}Mn_{0.1}O₂ (can also be abbreviated as NCM811), lithium nickel cobalt aluminum oxides (e.g., LiNi_{0.85}Co_{0.15}Al_{0.05}O₂) and modified compounds thereof.

In some embodiments, the positive electrode may adopt metal foam. The metal foam can be nickel foam, copper foam, aluminum foam, alloy foam, etc. When the metal foam is treated as the positive electrode, the positive electrode active material may be not arranged on a surface of the metal foam, and the positive electrode active material may also be arranged. As an example, a lithium source material, potassium metal or sodium metal may also be filled or/and deposited in the metal foam, and the lithium source material is lithium metal and/or a lithium-rich material.

In some embodiments, the negative electrode may be a negative electrode plate, and the negative electrode plate may include a negative electrode current collector.

As an example, the negative electrode current collector may adopt a metal foil, metal foam or a composite current collector. For example, if it is the metal foil, silver-plated aluminum, silver-plated stainless steel, stainless steel, copper, aluminum, nickel, carbon-fine electrode, carbon, nickel or titanium and the like can be adopted. The metal foam can be nickel foam, copper foam, aluminum foam, alloy foam, etc. The composite current collector may include a high molecular material substrate and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene glycol terephthalate, polybutylene terephthalate, polystyrene, polyethylene, etc.).

For example, the negative electrode plate may include a negative electrode current collector and a negative electrode active material provided on at least one surface of the negative electrode current collector.

As an example, the negative electrode current collector has two opposite surfaces in the thickness direction, and the negative electrode active material is arranged on any one of or both the two opposite surfaces of the negative electrode current collector.

As an example, the negative electrode active material can be a negative electrode active material which is known in the field and used for the battery cell. As an example, the negative electrode active material can include at least one of the following materials: artificial graphite, natural graphite, soft carbon, hard carbon, a silicon-based material, a tin-based material, lithium titanate and the like. The silicon-based material can include at least one of monatomic silicon, a silicon-oxygen compound, a silicon-carbon compound, a silicon-nitrogen compound and a silicon alloy. The tin-based material can include at least one selected from the group of monatomic tin, a tin-oxygen compound and a tin alloy. However, it is not limited to these materials in the present application, other traditional materials which can be used as the negative electrode active material of the battery cell can also be adopted. These negative electrode active materials can be used alone or in combination with more than two.

In some embodiments, the material of the positive electrode current collector may be aluminum, and the material of the negative electrode current collector may be copper.

In some embodiments, the spacer is an isolation film. The isolation film can be any well-known porous separator with high chemical stability and mechanical stability.

As an example, the material of the isolation film may be selected from a group consisting of at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the separator is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a winding structure. The positive electrode plate and the negative electrode plate are wound into the wound structure.

In some implementations, the electrode assembly is of a stacked structure.

As an example, a plurality of positive electrode plates and a plurality of negative electrode plates may be provided, and the plurality of positive electrode plates and the plurality of negative electrode plates may be alternately stacked.

As an example, a plurality of positive electrode plates may be provided, and the negative electrode plate may be folded to form a plurality of stacked folded segments, with one positive electrode plate sandwiched between adjacent folded segments.

As an example, both the positive electrode plates and the negative electrode plates are folded to form a plurality of stacked folded segments.

As an example, a plurality of spacers may be provided and arranged between any adjacent positive electrode plates or negative electrode plates.

As an example, the spacers may be continuously provided between any adjacent positive electrode plates or negative electrode plates in a folding or winding mode.

In some implementations, the shape of the electrode assembly may be a cylinder, a flat shape, a polygon prism, or the like.

In some embodiments, the electrode assembly is provided with a tab, and the tab may lead current out of the electrode assembly. The tabs include a positive tab and a negative tab.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell can be a cylindrical battery cell, a prismatic battery cell, a pouch battery cell, or a battery cell in other shapes; the prismatic battery cell includes a square-case battery cell, a blade-shaped battery cell, and a polygon prism shaped battery cell, such as a hexagonal prism battery cell.

The battery apparatus in the embodiments of the present application can include one or more battery cell assemblies for providing voltage and capacity. The battery cell assembly can include the plurality of battery cells, and the plurality of battery cells are connected in series or in parallel or in a series-parallel mode through a busbar component.

In some embodiments, the battery cell assembly is generally formed by arranging a plurality of battery cells; as an example, the battery cell assembly may be a battery module, and the battery module is formed by arranging and fixing a plurality of battery cells to form an independent module.

As an example, the battery module may be formed by binding a plurality of battery cells with a binding tape.

In some embodiments, the battery apparatus can be a battery pack, and the battery pack includes a box and one or more battery cell assemblies accommodated in the box.

As an example, the battery cell assemblies can be battery modules and can be accommodated in the box by a mode of fixing the battery modules into the box.

As an example, the battery cell assemblies can also be accommodated in the box by a mode of directly fixing the battery cells into the box.

As an example, the box can include a first box body and a second box body. The first box body and the second box body are buckled to form an enclosure space in the box to accommodate the battery cell assembly. Enclosure here means covering or closing, and may be sealed or unsealed. The first box body can be a top cover or a bottom plate.

As an example, the box can include the top cover, a frame, and the bottom plate. The top cover and the bottom plate are respectively connected to the frame, so that the enclosure space is formed in the box body to accommodate the battery cell assembly.

As an example, the box can be treated as a part of a chassis structure of the vehicle. For example, the top cover of the box can be treated as at least a part of a floor of the vehicle, or, the frame of the box body can be treated as at least a part of a cross beam and a longitudinal beam of the vehicle.

In some embodiments, the battery apparatus refers to an energy storage apparatus, the energy storage device includes a box, and a door is arranged on at least one side of the box. The energy storage apparatus includes an energy storage container, an energy storage electric cabinet and the like.

The battery apparatus includes at least one battery cell assembly, a signal acquisition assembly, and a battery monitoring module, and the signal acquisition assembly can acquire the information of battery cells of the battery cell assembly and transmit the acquired information to the battery monitoring module. In related technologies, in order to realize signal transmission between the signal acquisition assembly and the battery monitoring module, the signal acquisition assembly and the battery monitoring module are connected through a wiring harness, the wiring harness occupies a large space in the battery apparatus, leading to a decrease in the energy density of the battery apparatus; in addition, the wiring harness in the box is easily interfered and worn with a high-voltage box, a busbar component, and an inner wall of the box, resulting in sampling failure and reduced reliability. Moreover, the overall price of the transfer wiring harness is high, which makes the cost of the battery apparatus higher.

In view of above, in order to improve the reliability and energy density of the battery apparatus, the embodiment of the present application provides the battery apparatus; t signal acquisition assembly of the battery apparatus includes a wiring harness group and a first connector; the first connector is connected to one end of the wiring harness group, and an acquisition unit of each signal acquisition assembly is configured to acquire the information of the battery cells of the battery cell assembly; the battery monitoring module of the battery apparatus is provided with a second connector, and the second connector is in insertion fit with the first connector.

The signal acquisition assembly includes the first connector, the battery monitoring module is provided with the second connector, the first connector is in insertion fit with the second connector to realize communication connection between the signal acquisition assembly and the battery monitoring module, it is not needed to connect the signal acquisition assembly with the battery monitoring module through a wiring harness, thus the space occupied by the communication connection between the signal acquisition assembly and the battery monitoring module 50 is reduced, the risk of sampling failure caused by interference and wear of the first connector and the second connector between the high-voltage box, the busbar component, and the inner wall of the box of the battery apparatus is reduced, the use reliability is improved, thereby improving the reliability of the battery apparatus; and moreover, the cost of the battery apparatus can be reduced. In addition, the insertion fit mode is simple and reliable, and the difficulty in assembling the battery apparatus can be reduced.

The technical solutions described in the embodiments of the present application are applicable to various electrical apparatuses that use the battery cells and the battery apparatuses, such as mobile phones, portable devices, laptops, electric vehicles, electric toys, power tools, vehicles, ships, and spacecraft, for example, spacecraft including airplanes, rockets, space shuttles, and spaceships.

The following embodiment, for the sake of convenience, are illustrated with an example of the electrical device for the vehicle.

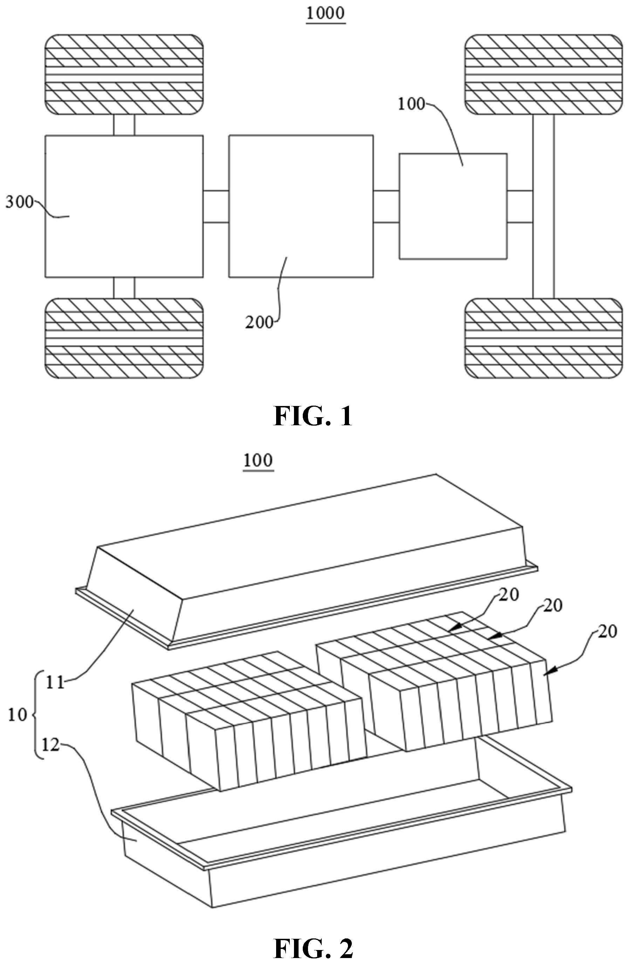

FIG. 1 is referred, and FIG. 1 is a schematic structural diagram of a vehicle 1000 provided by some embodiments of the present application. A battery apparatus 100 is arranged in the vehicle 1000, and the battery apparatus 100 can be arranged at the bottom or head or tail of the vehicle 1000. The battery apparatus 100 can be configured to supply power to the vehicle 1000, for example, the battery apparatus 100 can be used as an operation power supply of the vehicle 1000.

The vehicle 1000 can further include a controller 300 and a motor 200, and the controller 300 is used for controlling the battery apparatus 100 to supply power to the motor 200, for example, the controller 300 is used for meeting the working power consumption requirements of the vehicle 1000 in starting, navigation and driving.

In some embodiments of the present application, the battery apparatus 100 can serve as the operation power source of the vehicle 1000 and can also serve as a driving power source of the vehicle 1000, and replaces or partially replace fuel oil or natural gas to provide driving power for the vehicle 1000.

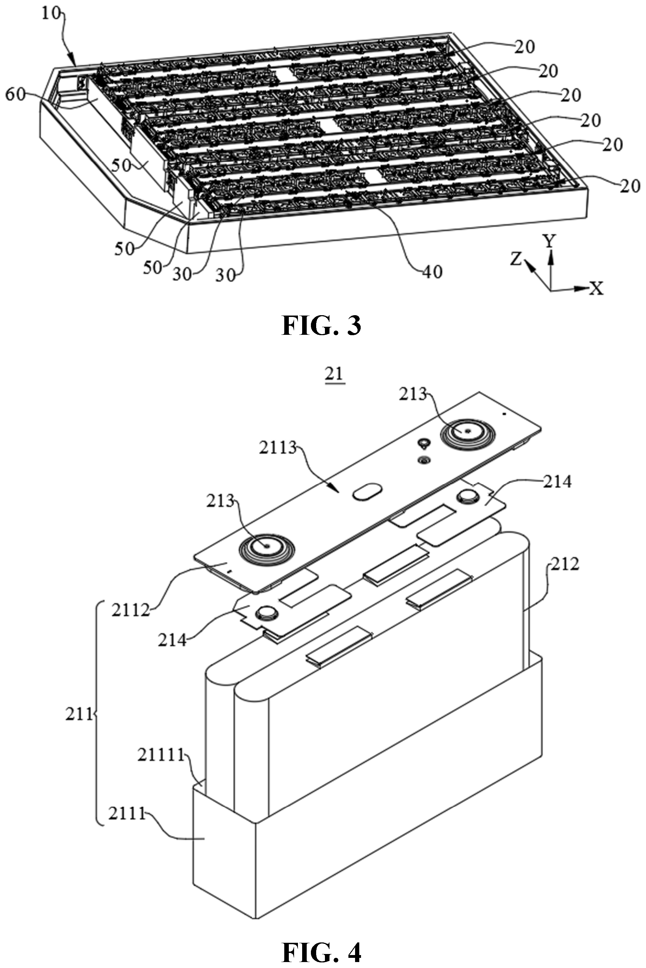

With reference to FIG. 2, FIG. 2 is an exploded view of a battery apparatus 100 according to some embodiments of the present application, and FIG. 3 is a partial schematic diagram of the battery apparatus 100 according to some embodiments of the present application. The battery apparatus 100 can include a box 10 and a battery cell assembly 20, and the box 10 is configured to accommodate the battery cell assembly 20.

An enclosure space for accommodating the battery cell assembly 20 is formed in the box 10. The box 10 can be of various structures. In some embodiments, the box 10 may include a first box body 11 and a second box body 12, and the first box body 11 and the second box body 12 fasten each other. The first box body 11 and the second box body 12 may have a variety of shapes, such as a cuboid, a cylinder, etc. The first box body 11 may be of a hollow structure with one side open, the second box body 12 may also be of a hollow structure with one side open, and the open side of the second box body 12 fastens the open side of the first box body 11, so as to form the box 10 having the accommodating space. It is also possible that the first box body 11 may be of a hollow structure with one side open, the second portion 12 may be a plate-like structure, and the second part 12 fastens the open side of the first part 11, so as to form the box body 10 having the enclosure space.

In the battery apparatus 100, the battery apparatus 100 can include the battery cell assembly 20, and the battery cell assembly 20 includes a plurality of battery cells 21 arranged along a first direction X. The battery apparatus 100 can include one battery cell assembly 20 or a plurality of battery cell assemblies 20. In the battery apparatus 100, the plurality of battery cells 21 can be connected in series or in parallel or in series-parallel, and the series-parallel connection refers to that the plurality of battery cells 21 are connected in series and in parallel. It is to be understood that the battery cell assembly 20 can be formed by connecting the plurality of battery cells 21 in series or in parallel or in series-parallel combination; and in the embodiment that the battery apparatus 100 includes the plurality of battery cell assemblies 20, the plurality of battery cell assemblies 20 can be connected in series or in parallel or in series-parallel combination to form a whole and are accommodated in the box 10.

In some embodiments, the battery apparatus 100 can also include a busbar component 30; in the same battery cell assembly 20, the plurality of battery cells 21 can be electrically connected through the busbar component 30, thus achieving series connection or parallel connection or series-parallel connection of the plurality of battery cells 21. The plurality of battery cell assemblies 20 can also be electrically connected through the busbar component 30 to achieve series connection or parallel connection or series-parallel connection of the plurality of battery cell assemblies 20. The busbar component 30 can be a metal conductor, such as copper, iron, aluminum, stainless steel, aluminum alloy and the like.

With reference to FIG. 4, FIG. 4 is an exploded view of a battery cell 21 provided by some embodiments of the present application. The battery cell 21 can include a shell 211 and an electrode assembly 212, and the electrode assembly 212 is accommodated in the shell 211.

In some embodiments, the shell 211 can include a case 2111 and an end cover 2112, the case 2111 is provided with an opening 21111, and the end cover 2112 seals the opening 21111 of the case 2111. Enclosure here means covering or closing, and may be sealed or unsealed.

The case 2111 is a component for accommodating the electrode assembly 212, the case 2111 can be of a hollow structure with the opening 21111 formed in one end, and the case 2111 can be of a hollow structure with the openings 21111 formed in two opposite ends. The case 2111 can be in various shapes, such as a cylinder shape, and a cuboid shape. The case 2111 can be made of various materials, such as copper, iron, aluminum, steel, and aluminum alloy. An electrode assembly 212 can be partially located in the case 2111 or completely located in the case 2111.

The end cover 2112 and the case 2111 jointly define an accommodating space for accommodating the electrode assembly 212 and other components. The end cover 2112 can be connected to the case 2111 in a welding, rolling sealing manner so as to seal the opening 21111 of the case 2111. The shape of the end cover 2112 can be matched with the shape of the case 2111, for example, if the case 2111 is of a cuboid structure, the end cover 2112 will be of a rectangular plate-shaped structure matched with the case 2111, for another example, if the case 2111 is of a cylinder structure, the end cover 2112 will be of a circular plate-shaped structure matched with the case 2111. There can be various materials of an end cover 2112, such as copper, iron, aluminum, steel, and an aluminum alloy; the material of the end cover 2112 can be the same as or different from that of the case 2111.

In the embodiment that an opening 21111 is formed in one end of the case 2111, one end cover 2112 can be correspondingly arranged. In an embodiment that the case 2111 is provided with the openings 21111 in two opposite ends, two end covers 2112 can be correspondingly arranged, the two end covers 2112 seal the two openings 21111 of the case 2111 respectively, and the two end covers 2112 and the case 2111 jointly define the accommodating space.

In some embodiments, the battery cell 21 may further include an electrode terminal 213, and the electrode terminal 213 is arranged on the shell 211 and is electrically connected to an electrode tab of the electrode assembly 212 so as to input or output electric energy of the battery cell 21. The electrode terminal 213 can be arranged on the case 2111 of the shell 211, or arranged on the end cover 2112 of the shell 211. The electrode terminal 213 can be directly connected to the electrode tab, for example, the electrode terminal 213 is welded with the electrode tab. The electrode terminal 213 can also be indirectly connected to the electrode tab, for example, the electrode terminal 213 is indirectly connected to the electrode tab by means of a current collecting member 214. The current collecting member 214 can be a metal conductor, such as copper, iron, aluminum, steel, and aluminum alloy.

As an example, as shown in FIG. 4, if the opening 21111 is formed in one end of the case 2111, one end cover 2112 is arranged in the shell 211, and one end cover 2112 seals one opening 21111 of the case 2111. Two electrode terminals 213 are arranged on the end cover 2112, and the two electrode terminals 213 are respectively a positive electrode terminal and a negative electrode terminal; a positive electrode tab and a negative electrode tab are formed at one end of the electrode assembly 212 facing the end cover 2112; and the positive electrode terminal is connected to the positive electrode tab, and the negative electrode terminal is electrically connected to the negative electrode tab.

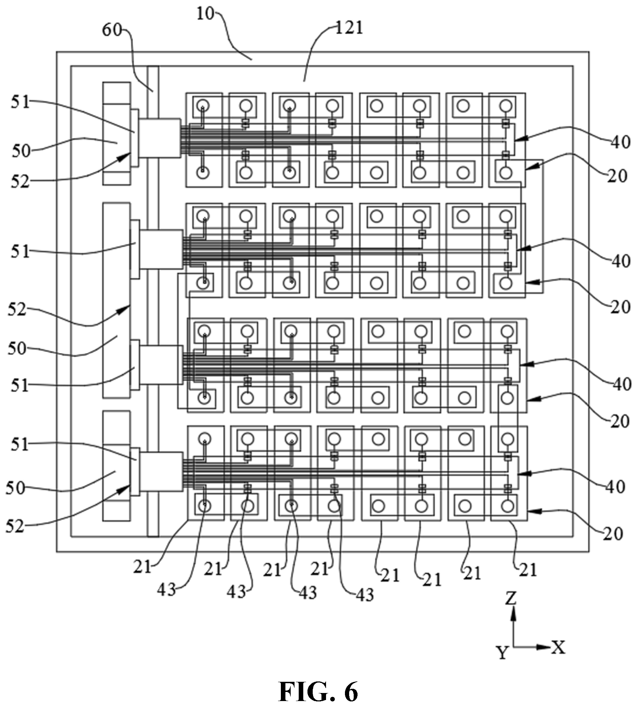

As shown in FIG. 3, FIG. 5 to FIG. 7, in some embodiments, the battery apparatus 100 includes the battery cell assembly 20, a signal acquisition assembly 40, and a battery monitoring module 50; the battery cell assembly 20 includes a plurality of battery cells 21 arranged along the first direction X; the signal acquisition assembly 40 is configured to acquire information of the battery cells 21 of the battery cell assembly 20, and includes a wiring harness group 41 and a first connector 42; the first connector 42 is connected to one end of the wiring harness group 41; the battery monitoring module 50 is provided with a second connector 51; and the second connector 51 is in insertion fit with the first connector 42.

The battery apparatus 100 can include one battery cell assembly 20 or a plurality of battery cell assemblies 20; and the plurality of battery cell assemblies 20 are arranged side by side along a certain direction.

One battery cell assembly 20 can be correspondingly provided with one signal acquisition assembly 40, and each signal acquisition assembly 40 acquires the information of the battery cells 21 of the corresponding battery cell assembly 20.

One signal acquisition assembly 40 can also correspond to the plurality of battery cell assemblies 20, and one signal acquisition assembly 40 acquires the information of the battery cells 21 of the corresponding plurality of battery cell assemblies 20.

The signal acquisition assembly 40 is configured to acquiring the information of the battery cells 21, such as temperature information, and voltage information. The signal acquisition assembly 40 can be in various forms, for example, the signal acquisition assembly 40 can be an FPC (Flexible Printed Circuit Board), an FFC (Flexible Flat Cable), and the like.

In some embodiments, the signal acquisition assembly 40 further includes an acquisition member 43. The acquisition member 43 includes, but is not limited to, a temperature sensor, a pressure sensor, a voltage sensor, and the like. The signal acquisition assembly 40 can include one or more acquisition members 43. In some embodiments, the signal acquisition assembly 40 can include a fuse electrically connected to a busbar component 30.

One battery cell 21 can correspond to one acquisition member 43, or a plurality of acquisition members 43. In the embodiment that each battery cell 21 corresponds to the plurality of acquisition members 43, the plurality of acquisition members 43 can be different so as to acquire different information of the battery cell 21, for example, one battery cell 21 is correspondingly provided with two acquisition members 43, and the two acquisition members 43 are respectively configured to acquiring the temperature and the voltage of the battery cell 21.

The battery monitoring module 50 is a CMC (Cell monitoring circuit), and receives the information of the battery cell 21 acquired by the signal acquisition assembly 40 so as to monitor the battery cell 21, for example, the voltage, the temperature, and the like of the battery cell 21.

The first connector 42 is in insertion with the second connector 51, and one of the first connector 42 and the second connector 51 is provided with an inserting hole 511 for the other one to insert. The first connector 42 can be inserted into the second connector 51, or the second connector 51 can be inserted into the first connector 42.

After the first connector 42 and the second connector 51 are inserted, communication connection between the information acquisition assembly and the battery monitoring module 50 is realized, and the information of the battery cell 21 acquired by the information acquisition assembly can be transmitted to the battery monitoring module 50.

The signal acquisition assembly 40 includes the first connector 42, the battery monitoring module 50 is provided with the second connector 51, the first connector 42 is in insertion fit with the second connector 51 to realize communication connection between the signal acquisition assembly 40 and the battery monitoring module 50, it is not needed to connect the signal acquisition assembly 40 with the battery monitoring module 50 through a wiring harness, thus the space occupied by the communication connection between the signal acquisition assembly 40 and the battery monitoring module 50 is reduced, the risk of sampling failure caused by interference and wear of the first connector 42 and the second connector 51 between the high-voltage box, the busbar component 30, and the inner wall of the box 10 of the battery apparatus 100 is reduced, the use reliability is improved, thereby improving the reliability of the battery apparatus 100; and moreover, the cost of the battery apparatus 100 can be reduced. In addition, the insertion fit mode is simple and reliable, and the difficulty in assembling the battery apparatus 100 can be reduced.

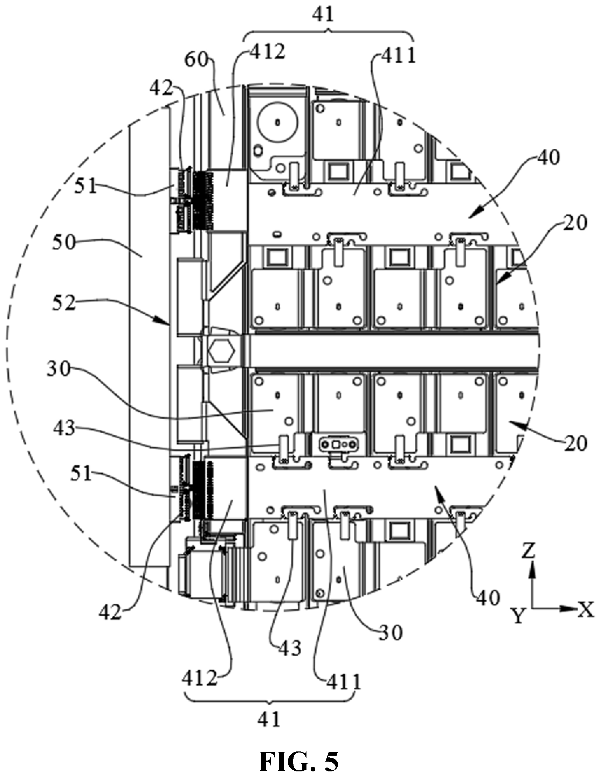

As shown in FIG. 5 to FIG. 7, in some embodiments, the battery monitoring module 50 and the battery cell assembly 20 are arranged along the first direction X; and along the first direction X, the first connector 42 and the second connector 51 are located on the side of the battery cell assembly 20 facing the battery monitoring module 50.

Along the first direction X, the first connector 42 and the second connector 51 can be located between the battery monitoring module 50 and the battery cell assembly 20. Along the first direction X, the first connector 42 and the second connector 51 can also be located on the side of the battery monitoring module 50 away from the battery cell assembly 20.

The first connector 42 and the second connector 51 are arranged on the side of the battery cell assembly 20 facing the battery monitoring module 50, thus reducing the connection distance from the first connector 42 to the second connector 51, facilitating connection, reducing the space occupied by the first connector 42 and the second connector 51, improving the energy density of the battery apparatus 100, and moreover, reducing the risk of interference between the first connector 42 and the second connector 51 and other structures in the battery apparatus 100, as well as improving the reliability of the battery apparatus 100.

As shown in FIG. 5 to FIG. 8, in some embodiments, along the first direction X, the second connector 51 is arranged on the side of the battery monitoring module 50 facing the battery cell assembly 20.

The second connector 51 is arranged on the side of the battery monitoring module 50 facing the battery cell assembly 20, so that the insertion direction of the first connector 42 and the second connector 51 can be parallel to the first direction X, and the insertion mode enables the first connector 42 and the second connector 51 to form a vertical structure after insertion.

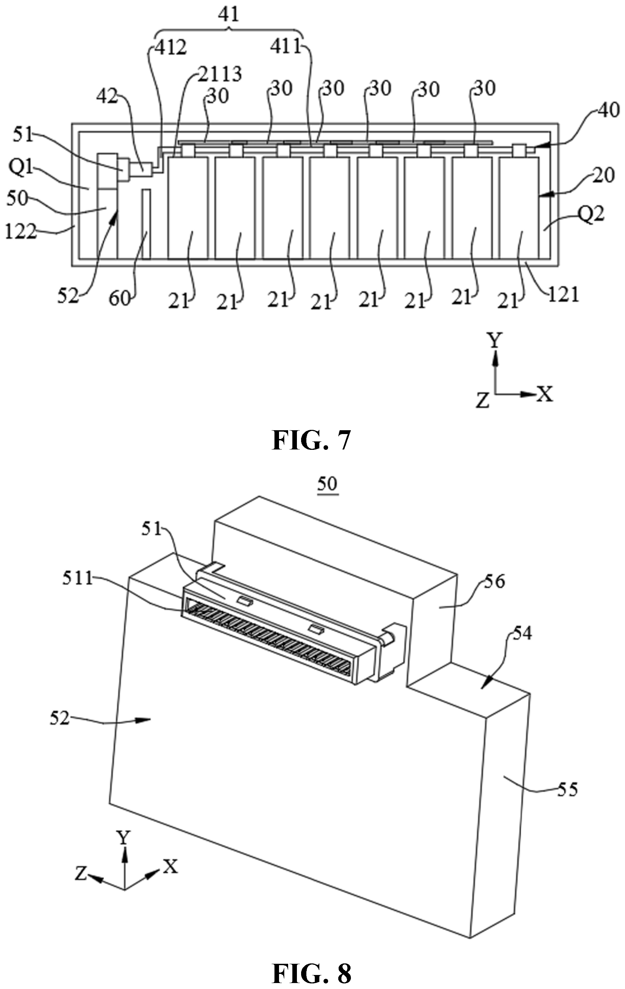

As shown in FIG. 7 and FIG. 8, the battery monitoring module 50 is of a plate-shaped structure, the first direction X is parallel to a thickness direction of the battery monitoring module 50, the insertion direction of the first connector 42 and the second connector 51 is parallel to a thickness direction of the battery monitoring module 50, and the first connector 42 and the second connector 51 are inserted to form a vertical structure.

In the embodiment that the second connector 51 is provided with an inserting hole 511 for inserting the first connector 42, an inlet, for inserting the first connector 42, of the inserting hole 511 faces the battery cell assembly 20, such that the insertion direction of the first connector 42 and the second connector 51 can be parallel to the first direction X.

Along the first direction X, the second connector 51 is provided with a first end surface 52 facing the battery cell assembly 20.

As shown in FIG. 7 and FIG. 8, the second connector 51 can be convexly arranged on the first end surface 52, the second connector 51 extends from the first end surface 52 to the direction close to the battery cell assembly 20, and the inserting hole 511 is sunken from the end of the second connector 51 deviating from the first end surface 52 to the direction close to the first end surface 52.

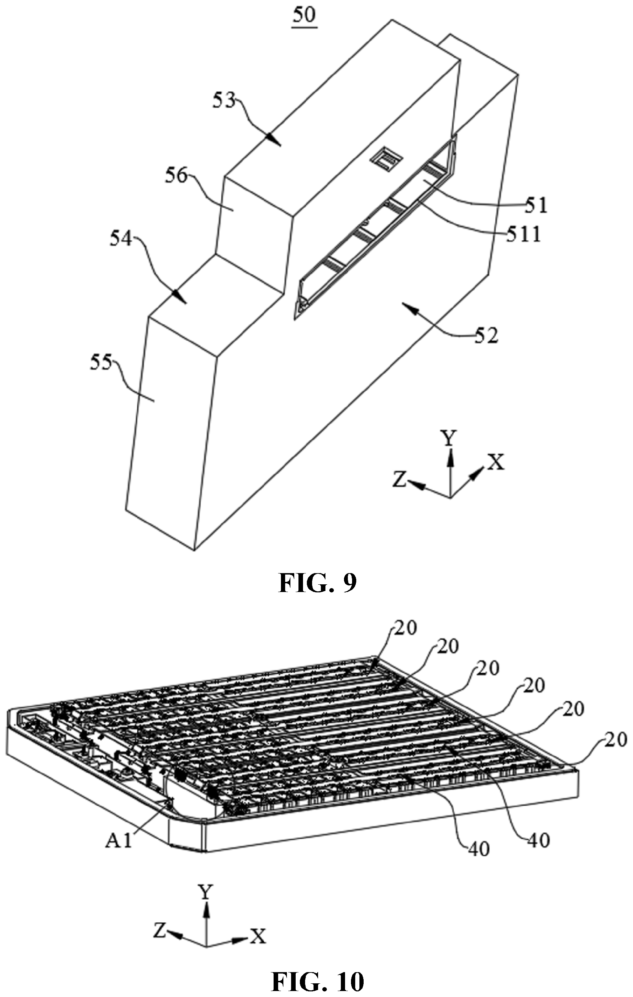

As shown in FIG. 9, the inserting hole 511 of the second connector 51 can be arranged on the first end surface 52, namely the inserting hole 511 is sunken from the first end surface 52 to the direction deviating from the battery cell assembly 20.

In an embodiment that the first connector 42 is provided with the inserting hole 511 for the second connector 51 to be inserted, the second connector 51 can be convexly arranged on the first end surface 52 and extends in the direction close to the battery cell assembly 20, such that the insertion direction of the first connector 42 and the second connector 51 can be parallel to the first direction X.

The second connector 51 is arranged on the side of the battery monitoring module 50 facing the battery cell assembly 20, so that the second connector 51 is closer to the first connector 42, the first connector 42 and the second connector are conveniently inserted; and moreover, the internal structure of the battery apparatus 100 can be more compact, thereby reducing the size of the battery apparatus 100, as well as improving the energy density of the battery apparatus 100.

As shown FIG. 7, in some embodiments, along the first direction X, at least part of the first connector 42 is located between the battery monitoring module 50 and the battery cell assembly 20; and in a projection plane perpendicular to the first direction X, at least part of an orthographic projection of the first connector 42 overlaps with at least part of the orthographic projections of the battery cells 21.

The first connector 42 can be partially located between the battery monitoring module 50 and the battery cell assembly 20 or completely located between the battery monitoring module 50 and the battery cell assembly 20. FIG. 7 shows a situation that the first connector 42 is completely located between the battery monitoring module 50 and the battery cell assembly 20.

Along a second direction Y, the first connector 42 can be partially located between the battery monitoring module 50 and the battery cell assembly 20 or completely located between the battery monitoring module 50 and the battery cell assembly 20.

Along a third direction Z, the first connector 42 can be partially located between the battery monitoring module 50 and the battery cell assembly 20 or completely located between the battery monitoring module 50 and the battery cell assembly 20.

The first direction X, the second direction Y, and the third direction Z are perpendicular to one another.

At least part of the first connector 42 is located between the battery monitoring module 50 and the battery cell assembly 20, and in the projection plane perpendicular to the first direction X, at least part of the orthographic projection of the first connector 42 overlaps with at least part of the orthographic projections of the battery cells 21, such that the first connector 42 and the battery cells 21 are overlapped in space, the space between the battery monitoring module 50 and the battery cell assembly 20 can be fully utilized by the first connector 42, the space occupied by the first connector 42 and the second connector 51 in other directions can be reduced, thereby reducing the size of the battery apparatus 100, and improving the energy density of the battery apparatus 100.

As shown in FIG. 5 to FIG. 7, in some embodiments, the insertion direction of the first connector 42 and the second connector 51 is parallel to the first direction X.

The first connector 42 and the second connector 51 are inserted to form the vertical structure.

The insertion direction of the first connector 42 and the second connector 51 is parallel to the first direction X, thus the space along the first direction in the battery apparatus 100 can be fully utilized, the space occupied by the first connector 42 and the second connector 51 in other directions can be reduced, thereby reducing the size of the battery apparatus 100 in other directions as well as reducing the size of the battery apparatus 100.

As shown in FIG. 10 to FIG. 12, in some embodiments, the battery apparatus 100 includes a box 10; the battery cell assembly 20 is accommodated in the box 10; the box 10 includes a box bottom wall 121, and the box bottom wall 121 supports the battery cell assembly 20 along second direction Y, and the second direction Y intersects with the first direction X; and along the second direction Y, the second connector 51 is arranged on the side of the battery monitoring module 50 deviating from the box bottom wall 121.

The box bottom wall 121 is a bottom plate of the box 10 and bears the weight of the battery cell assembly 20. The second direction Y can be a gravity direction, and the second direction Y is perpendicular to the first direction X.

The second connector 51 is arranged on the side of the battery monitoring module 50 deviating from the box bottom wall 121 along the second direction Y, the insertion direction of the first connector 42 and the second connector 51 can intersect with the first direction X, and thus the first connector 42 and the second connector 51 are inserted to form a horizontal structure by such insertion way.

As shown in FIG. 10 to FIG. 11, the battery monitoring module 50 is of the plate-shaped structure, the first direction X is parallel to the thickness direction of the battery monitoring module 50, the insertion direction of the first connector 42 and the second connector 51 is perpendicular to the thickness direction of the battery monitoring module 50, and the first connector 42 and the second connector 51 are inserted to form the horizontal structure.

In an embodiment that the second connector 51 is provided with an inserting hole 511 for inserting the first connector 42, an inlet, for inserting the first connector 42, of the inserting hole 511 faces the side deviating from the box bottom wall 121, so that the insertion direction of the first connector 42 and the second connector 51 can be parallel to the second direction Y.

Along the second direction Y, the second connector 51 is provided with a second end surface 53 farthest away from the box bottom wall 121.

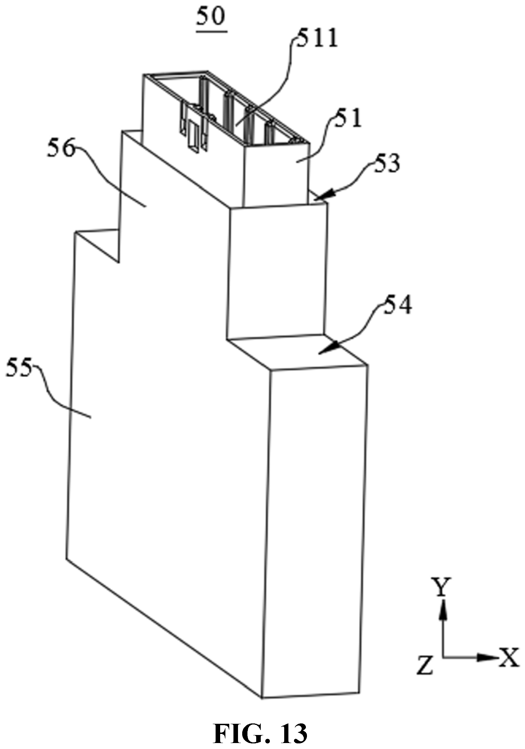

As shown in FIG. 13, the second connector 51 can be convexly arranged on the second end surface 53 and extends from the second end surface 53 to the direction deviating from the box bottom wall 121, and the inserting hole 511 is sunken from the end of the second connector 51 deviating from the second end surface 53 to the direction close to the box bottom wall 121.

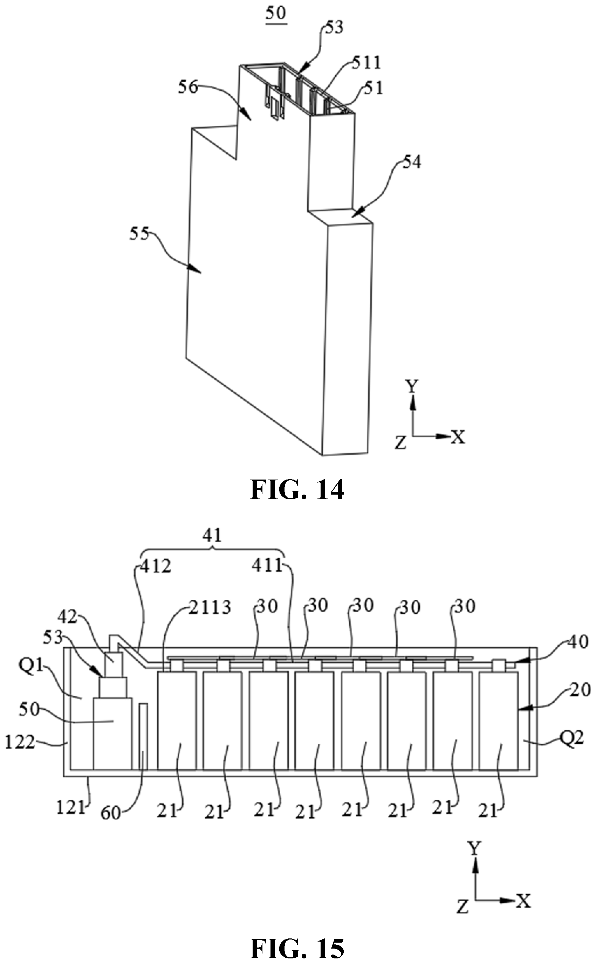

As shown in FIG. 14, the inserting hole 511 can be arranged in the second end surface 53, namely the inserting hole 511 is sunken from the second end surface 53 to the direction close to the box bottom wall 121.

In an embodiment that the first connector 42 is provided with the inserting hole 511 for inserting the second connector 51, the second connector 51 can be convexly arranged on the first end surface 52 and extends to the direction deviating from the box bottom wall 121, so that the insertion direction of the first connector 42 and the second connector 51 can be parallel to the second direction Y.

The second connector 51 is arranged on the side of the battery monitoring module 50 deviating from the box bottom wall 121, which is conductive to fully utilize the space along the second direction Y in the battery apparatus 100, thereby reducing the space occupied by the first connector 42 and the second connector 51 in other directions, and reducing the size of the battery apparatus 100.

As shown in FIG. 15, in some embodiments, each battery cell 21 includes a shell 211 and an electrode assembly 212; the electrode assembly 212 is accommodated in the shell 211; along the second direction Y, the shell 211 is provided with a first surface 2113 deviating from the box bottom wall 121; the battery monitoring module 50 does not exceed the first surface 2113 in a direction deviating from the box bottom wall 121.

The first surface 2113 can be an outer surface of an end cover 2112 or a part of the outer surface of the case 2111. For example, when the battery cell 21 is positively arranged, an electrode terminal 213 of each battery cell 21 is arranged on the end cover 2112 and protrudes out of the surface of the end cover 2112 in a direction deviating from the box bottom wall 121, and the first surface 2113 is the outer surface of the end cover 2112. For another example, if the battery cell 21 is reversely arranged, the electrode terminal 213 of the battery cell 21 is arranged on the end cover 2112 and protrudes out of the surface of the end cover 2112 in a direction facing the box bottom wall 121, and the first surface 2113 is the outer surface of the wall part of the case 2111 opposite to the end cover 2112.

Along the second direction Y, the end of the battery monitoring module 50 farthest from the box bottom wall 121 can be flush with the first surface 2113; or, along the second direction Y, the surface of the battery monitoring module 50 farthest from the box bottom wall 121 is closer to the box bottom wall 121 relative to the first surface 2113. FIG. 15 shows a situation that the surface of the battery monitoring module 50 farthest from the box bottom wall 121 is closer to the box bottom wall 121 relative to the first surface 2113. Along the second direction Y, the surface of the battery monitoring module 50 farthest from the box bottom wall 121 can be the second end surface 53 or one surface of the second connector 51.

The battery monitoring module 50 does not exceed the first surface 2113 in a direction away from the box bottom wall 121, such that the second connector 51 and the first connector 42 can be accommodated in a space on the side of the first surface 2113 in the second direction Y of the box 10, thereby fully utilizing the space in the battery apparatus 100, reducing the space occupied by the second connector 51 in other directions, as well as reducing the size of the battery apparatus 100.

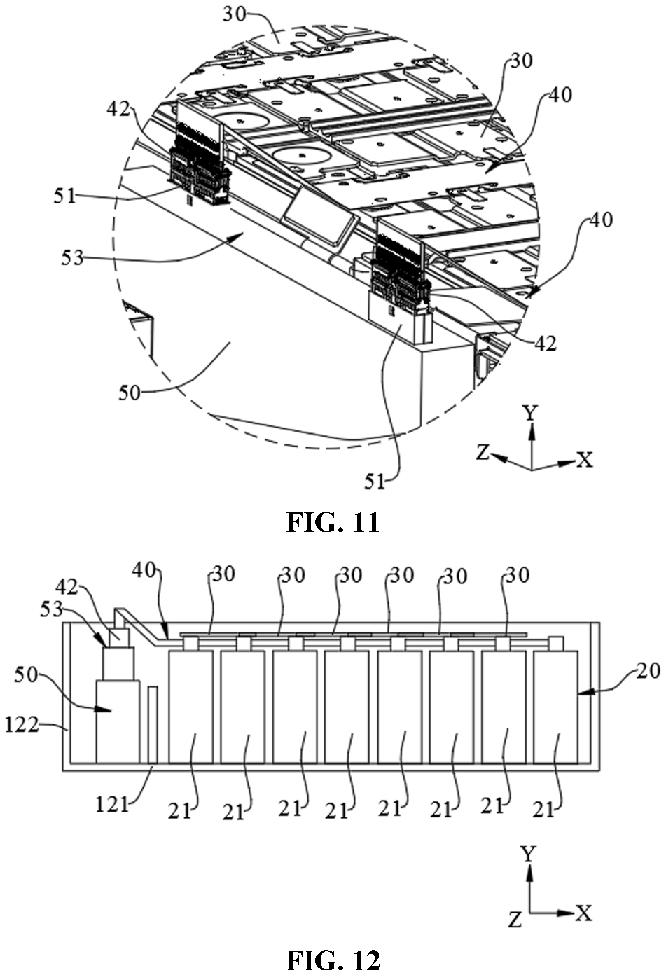

As shown in FIG. 11, FIG. 12, and FIG. 15, in some embodiments, the insertion direction of the first connector 42 and the second connector 51 is parallel to the second direction Y.

The first connector 42 and the second connector 51 are inserted to form the horizontal structure.

The insertion direction of the first connector 42 and the second connector 51 is parallel to the second direction Y, which facilitates the insertion of the first connector 42 and the second connector 51, thereby reducing the space occupied by the first connector 42 and the second connector 51 in other directions except the second direction Y. Under the condition that the battery monitoring module 50 does not exceed the first surface 2113 along the direction deviating from the box bottom wall 121, the first connector and the second connector 51 can be accommodated in the space on the side of the first surface 2113 of the box 10 in the second direction Y, such that the space in the battery apparatus 100 is fully utilized, the space occupied by the second connector 51 and the first connector 42 in other directions is reduced, thereby reducing the size of the battery apparatus 100.

As shown in FIG. 15, in some embodiments, the battery apparatus 100 includes the box 10; the battery cell assembly 20 is accommodated in the box 10; the box 10 includes the box bottom wall 121; the box bottom wall 121 supports the battery cell assembly 20 along the second direction Y; the battery monitoring module 50 is arranged on the box bottom wall 121; and the second direction Y intersects with the first direction X.

The battery monitoring module 50 can be in contact with the box bottom wall 121 without other connection relations, and it is to be understood that the box bottom wall 121 plays a supporting role on the battery monitoring module 50, avoiding the situation that the first connector 42 and the second connector 51 are unstable in connection due to suspending of the battery monitoring module 50.

The battery monitoring module 50 can be connected to the box bottom wall 121 by a certain connection process, such as bonding connection, welding connection, and bolt connection between the battery monitoring module 50 and the box bottom wall 121.

The battery monitoring module 50 is arranged on the box bottom wall 121, so that the arrangement of the battery monitoring module 50 is facilitated, and the stability of the battery monitoring module 50 is improved.

As shown in FIG. 15, in some embodiments, the battery monitoring module 50 and the battery cell assembly 20 are arranged along the first direction X, a wiring harness group 41 includes a main body region 411 and a connection region 412; the main body region 411 is arranged on the side of the battery cell assembly 20 deviating from the box bottom wall 121, and extends along the first direction X; the main body region 411 is connected to an acquisition member 43 and the connection region 412; and the connection region 412 exceeds the surface of the battery cell assembly 20 facing the battery monitoring module 50 along the first direction X, and is connected to the first connector 42.

In the embodiment that the battery cells 21 are arranged positively and the electrode terminal 213 of the battery cell 21 is arranged along the outer surface that protrudes out of the end cover 2112 and is deviated from the box bottom wall 121, the main body region 411 can be located on the side of the electrode terminal 213 deviating from the box bottom wall 121; and in the projection plane perpendicular to the second direction Y, the orthographic projection of the main body region 411 and the orthographic projection of the electrode terminal 213 are at least partially overlapped.

In the embodiment that the battery cells 21 are arranged positively and the electrode terminal 213 of the battery cell 21 is arranged along the outer surface that protrudes out of the end cover 2112 and is deviated from the box bottom wall 121, the main body region 411 can avoid the electrode terminal 213; and in the projection plane perpendicular to the second direction Y, the orthographic projection of the main body region 411 and the orthographic projection of the electrode terminal 213 are not overlapped.

The connection region 412 exceeds the battery cell assembly 20 along the first direction X; and in a projection plane vertical to a second direction Y, the orthographic projection of the connection region 412 and the orthographic projection of the battery cell assembly 20 are not overlapped.

In some embodiments, the connection region 412 can be at least partially located between the battery monitoring module 50 and the battery cell assembly 20.

In some other embodiments, along the second direction Y, the connection region 412 can be at least partially located outside the battery monitoring module 50 and the battery cell assembly 20.

The connection region 412 can extend along the first direction X, and thus the first connector 42 and the second connector 51 can be inserted along the first direction X.

The connection region 412 can also be bent relative to the main body region 411, such that the connection region 412 can be adjusted to a state that facilities the insertion of the first connector 42 and the second connector 51.

By way of example, as shown in FIG. 7, in an embodiment that the second connector 51 is arranged on the side of the battery monitoring module 50 facing the battery cell assembly 20, the connection region 412 can be bent for the first time around the edge of the shell 211 of each battery cell 21 closest to the battery monitoring module 50 in a direction close to the box bottom wall 121, and then is bent for the second time at another position in the extending direction of the connection region 412, such that part of the connection region 412 is closer to the box bottom wall 121 relative to the first surface 2113; and in the projection plane vertical to the first direction X, the orthographic projection of the connection region 412 and the orthographic projection of the battery cell 21 are overlapped, thus the connection region 412 is at least partially located between the battery cell assembly 20 and the battery monitoring module 50, and the space in the box 10 is fully utilized.

For another example, as shown in FIG. 15, in an embodiment that the second connector 51 is arranged on the side of the battery monitoring module 50 deviating from the box bottom wall 121 along the second direction Y, the connection region 412 can be bent for the first time around a position connected to the main body region 411 towards a direction far away from the box bottom wall 121, and then is bent for the second time at another position of an extension direction of the connection region 412, such that the first connector 42 and the second connector 51 are inserted along the second direction Y.

The main body region 411 of the wiring harness group 41 is connected to the acquisition member 43 and the connection region 412, the connection region 412 exceeds the surface of the battery cell assembly 20 facing the battery monitoring module 50 along the first direction X, and is connected to the first connector 42, which facilitates the insertion of the first connector 42 and the second connector 51, as well as facilitating the acquisition member 43 to acquire the information of the battery cells 21.

As shown in FIG. 15, in some embodiments, the battery apparatus 100 also includes a partition beam 60; the partition beam 60 is arranged in the box 10 and connected to the box 10; the partition beam 60 partitions the space in the box 10 into a first space Q1 and a second space Q2 which are arranged along the first direction X; and the battery monitoring module 50 and the battery cell assembly 20 are arranged in the first space Q1 and the second space Q2, respectively.

The box 10 also includes a box side wall 122 which encircles a periphery of the box bottom wall 121; and along the second direction Y, one end of the box side wall 122 is connected to the box bottom wall 121, while the other end of the box side wall 122 encircles an opening.

The partition beam 60 can be connected to the box bottom wall 121, for example, the partition beam 60 is connected to the box bottom wall 121 by a mode of bonding, welding, bolt connection and the like.

The partition beam 60 also can be connected to the box side wall 122, for example, both ends of the partition beam 60 are connected to the box side wall 122 along the third direction Z. The partition beam 60 is connected to the box side wall 122 by a mode of bonding, welding, bolt connection and the like.

The partition beam 60 can be connected to both the box bottom wall 121 and the box side wall 122.

Definitely, the partition beam 60 and the box 10 also can be of an integrated structure.

The partition beam 60 partitions the space in the box 10 into the first space Q1 and the second space Q2 along the first direction X, and the battery monitoring module 50 and the battery cell assembly 20 are arranged in the first space Q1 and the second space Q2, respectively, therefore, the battery monitoring module 50 and the battery cell assembly 20 can be conveniently arranged, and the risk of interference between the battery monitoring module 50 and the battery cell assembly 20 is reduced.

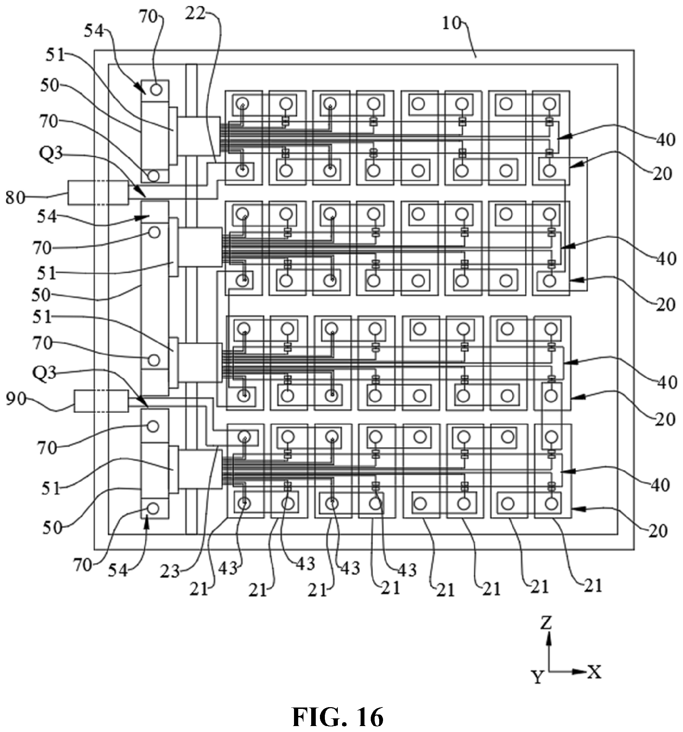

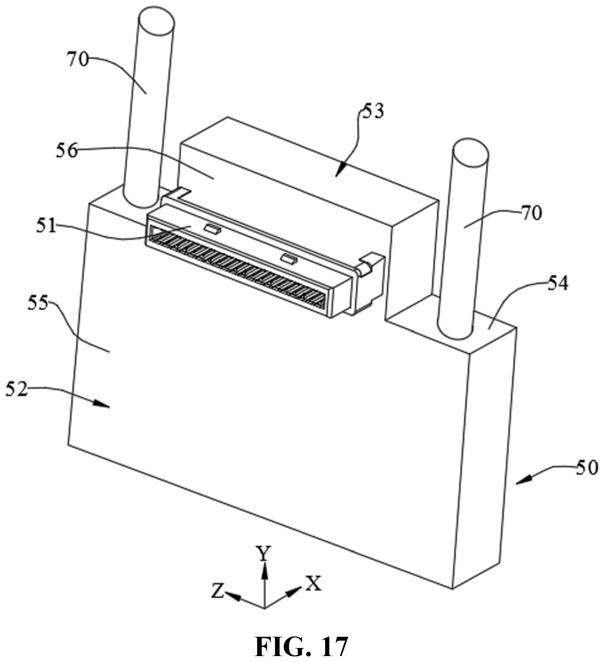

As shown in FIG. 16 and FIG. 17, in some embodiments, the battery apparatus 100 further includes a locking member 70, and the locking member 70 is configured to lock the battery monitoring module 50 to the box bottom wall 121.

The locking member 70 can be configured to lock the battery monitoring module 50 to the box bottom wall 121 by connecting the battery monitoring module 50 with the box bottom wall 121. The locking member 70 can be an adhesive, a bolt, a screw and the like.

The locking member 70 can be configured to press the battery monitoring module 50 to the box bottom wall 121 so as to lock the battery monitoring module 50 to the box bottom wall 121.

The battery monitoring module 50 is locked to the box bottom wall 121 through the locking member 70, thereby improving the stability of the battery monitoring module 50.

As shown in FIG. 16 and FIG. 17, in some embodiments, along the second direction Y, the battery monitoring module 50 is provided with the second surface 54 deviating from the box bottom wall 121, and the locking member 70 is pressed on the second surface 54 so as to lock the battery monitoring module 50 to the box bottom wall 121.

The second surface 54 can be a surface of the battery monitoring module 50 farthest away from the box bottom wall 121 along the second direction Y, or other surfaces of the battery monitoring module 50 opposite to the box bottom wall 121 along the second direction Y.

The locking member 70 can be of various structural forms; by way of example, the locking member 70 is a long bolt, with one end abutted against the second surface 54; the locking member 70 can be in threaded connection with the box 10 or in threaded connection with other structures in the box 10; and the locking member 70 is the long bolt, thus the battery monitoring module 50 can be pressed, and the pressing degree of the battery monitoring module 50 can be adjusted.

The locking member 70 is pressed on the second surface 54 to lock the battery monitoring module 50 to box bottom wall 121, it is not needed to arrange a connecting member on the box bottom wall 121 to lock the battery monitoring module 50 on the box bottom wall 121, thereby reducing the influence on the strength of the box 10.

One battery monitoring module 50 can be correspondingly provided with one locking member 70 or a plurality of locking members 70, and the battery monitoring module 50 is pressed on the box bottom wall 121 through the plurality of locking members 70, so that the stability of the battery monitoring module 50 is improved. By way of example, each battery monitoring module 50 is correspondingly provided with two locking members 70 which are arranged at intervals along the third direction Z; and the first direction X and the second direction Y intersect with the third direction Z.

In the embodiment, the first direction X, the second direction Y, and the third direction Z are perpendicular to one another.

The battery monitoring module 50 is locked to the box bottom wall 121 through the two locking members 70, thereby improving the stability of the battery monitoring module 50 as well as the stress uniformity of the battery monitoring module 50.

As shown in FIG. 17, in some embodiments, the battery monitoring module 50 includes a first part 55 and a second part 56; the first part 55 is arranged on the box bottom wall 121; along the second direction Y, the surface of the first part 55 deviating from the box bottom wall 121 is the second surface 54, and the second part 56 is connected to the second surface 54 and protrudes out of the second surface 54; and the second connector 51 is arranged on the second part 56.

The first part 55 and the second part 56 can be arranged in a split manner and then are connected into a whole to form the battery monitoring module 50; and the first part 55 and the second part 56 can be bonded, welded and the like.

The first part 55 and the second part 56 can also be integrally formed.

The second connector 51 can be arranged on the side of the second part 56 facing the battery single body assembly 20 along the first direction X, or on the side of the second part 56 deviating from the box bottom wall 121 along the second direction Y.

The second connector 51 is arranged on the second part 56, the locking member 70 abuts against the second surface 54, thus reducing the risk of interference of the second connector 51 and the first connector 42 after insertion to the locking member 70.

The second connector 51 is connected to the second surface 54 and protrudes out of the second surface 54 through the second part 56, the second connector 51 is arranged on the second part 56, thus facilitating insertion fit between the second connector 51 and the first connector 42.

At least part of the area of the second surface 54 protrudes out of the peripheral surface of the second part 56, namely, the second surface 54 can protrude out of any area of the peripheral surface of the second part 56, the part of the edge of the second surface 54 can be flush with the peripheral surface of the second part 56, and part of the second surface 54 protrudes out of the peripheral surface of the second part 56. The area of the second surface 54 protruding out of the second part 56 can abut against the locking member 70 so as to press the battery monitoring module 50 to the box bottom wall 121.

By way of example, in some embodiments, along the third direction Z, the second surface 54 protrudes out of both ends of the second part 56, and the first direction X and the second direction Y intersect with the third direction Z. Along the third direction Z, the parts of the second surface 54 protruding out of both ends of the second part 56 can abut against the locking member 70 so as to press the battery monitoring module 50 to the box bottom wall 121.

The second surface 54 protrudes from both ends of the second part 56 along the third direction Z, which facilitates the locking member 70 to press the second surface 54 and to press the second surface 54 from both sides of the second part 56 along the third direction Z; the battery monitoring module 50 can be jointly locked to the box bottom wall 121 through at least two locking members 70, thereby improving the stability of the battery monitoring module 50 and the stress uniformity of the battery monitoring module 50.

In some other embodiments, along the third direction Z, one end of the second surface 54 can be flush with one end of the second part 56, and the other end of the second surface 54 can be flush with the other end of the second part 56.

In some embodiments, along the first direction X, the two ends of the second surface 54 are flush with the two ends of the second part 56.

As shown in FIG. 16, in some embodiments, the battery apparatus 100 includes a plurality of signal acquisition assemblies 40 which are arranged along a third direction Z, and the third direction Z intersects with the first direction X; and each battery monitoring module 50 is arranged corresponding to at least one signal acquisition assembly 40.

The plurality of signal acquisition assemblies 40 can be arranged side by side along the third direction Z. Each battery monitoring module 50 can be provided with one or more second connector 51. In the embodiment that the battery monitoring module 50 is provided with the plurality of second connectors 51, one battery monitoring module 50 can be in insertion fit with the first connectors 42 of the plurality of signal acquisition assemblies 40, thus realizing communication connection with the plurality of information acquisition assemblies.

The battery apparatus 100 is provided with the plurality of signal acquisition assemblies 40, so that the information of the battery cells 21 of a plurality of battery cell assemblies 20 can be synchronously acquired, and the information of the battery cells 21 of the battery apparatus 100 can be acquired in time.

As shown in FIG. 16, in some embodiments, the battery apparatus 100 includes the plurality of battery monitoring modules 50 which are arranged along the third direction Z, and the first direction X intersects with the third direction Z.

The arrangement direction of the plurality of battery monitoring modules 50 can be the same as that of the plurality of signal acquisition assemblies 40. The number of the second connectors 51 arranged on each battery monitoring module 50 in the plurality of battery monitoring modules 50 can be the same or different. In the embodiments, one second connector 51 is arranged on one part of the plurality of battery monitoring modules 50, and the plurality of second connectors 51 are arranged on the other part of the plurality of battery monitoring modules 50.

The battery apparatus 100 is provided with the plurality of battery monitoring modules 50, thus the first connectors 42 of the signal acquisition assemblies 40 and the second connectors 51 of the battery monitoring modules 50 can be conveniently connected at a relatively short distance.

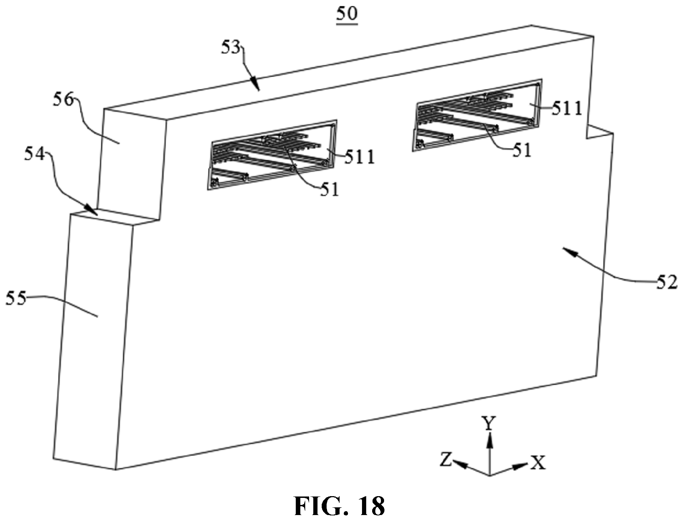

As shown in FIG. 16 and FIG. 18, in some embodiments, at least one battery monitoring module 50 is provided with a plurality of second connectors 51, and each second connector 51 is in insertion fit with the first connector 42 of one signal acquisition assembly 40.

One second connector 51 can be arranged in part of the plurality of battery monitoring modules 50, and the plurality of second connectors 51 can be arranged in the other part of the plurality of battery monitoring modules 50.

Definitely, all the battery monitoring modules 50 can be provided with the plurality of second connectors 51.

The battery monitoring module 50 provided with the plurality of second connectors 51 can be in insertion fit with the first connectors 42 of the plurality of information acquisition assemblies, and thus the communication connection between one battery monitoring module 50 and the plurality of information acquisition assemblies is achieved.

At least one battery monitoring module 50 is provided with the plurality of second connectors 51, and each second connector 51 is in insertion fit with the first connector 42 of one signal acquisition assembly 40, thus reducing the number of the battery monitoring modules 50 of the battery apparatus 100, decreasing the cost, moreover, reducing the space occupied by the battery monitoring module 50, reducing the size of the battery apparatus 100, as well as improving the energy density of the battery apparatus 100.

As shown in FIG. 16, in some embodiments, at least one battery monitoring module 50 is provided with one second connector 51, and one second connector 51 is in insertion fit with the first connector 42 of one signal acquisition assembly 40.

One second connector 51 can be arranged in part of the plurality of battery monitoring modules 50, and the plurality of second connectors 51 can be arranged in the other part of the plurality of battery monitoring modules 50.

Definitely, each battery monitoring modules 50 can be provided with one second connector 51.

At least one battery monitoring module 50 is provided with one second connector 51, and one second connector 51 is in insertion fit with the first connector 42 of one signal acquisition assembly 40, thus facilitating the signal transmission between the signal acquisition assembly 40 and the battery monitoring module 50.

As shown in FIG. 16, in the embodiment that the battery apparatus 100 includes the plurality of battery monitoring modules 50, part of the battery monitoring modules 50 are provided with the second connectors 51, and the other part of the battery monitoring modules 50 are provided with the plurality of second connectors 51.

As shown in FIG. 16, in some embodiments, at least one battery cell assembly 20 includes a positive electrode conveying part 22 and a negative electrode conveying part 23; the battery apparatus 100 further includes the box 10, a first conductive structure 80, and a second conductive structure 90; the battery cell assembly 20 is arranged in the box 10, and the box 10 is provided with a positive electrode lead-out part and a negative electrode lead-out part; the positive electrode lead-out part is connected to the positive electrode conveying part 22 through the first conductive structure 80, and the negative electrode lead-out part is connected to the negative electrode conveying part 23 through the second conductive structure 90; and an avoiding gap Q3 for the first conductive structure 80 and the second conductive structure 90 to pass through is formed between every two adjacent battery monitoring modules 50.

All the battery cell assemblies 20 are connected in series, in parallel or in series-parallel combination to form the battery module; and the positive electrode output part and the negative electrode output part are two electrodes, with opposite polarities, of the battery module, respectively.

The positive electrode lead-out part and the negative electrode lead-out part are electrodes for electrically connecting the battery apparatus 100 with an external device and realizing charging and discharging of the battery apparatus 100 respectively.

The first conductive structure 80 and the second conductive structure 90 can be wires 414, metal plates and the like.

The avoiding gap Q3 formed between every two adjacent battery monitoring modules 50 can be defined by the second parts 56 of every two adjacent battery monitoring modules 50, or defined by the first parts 55 and the second parts 56 of every two adjacent battery monitoring modules 50 together.

The avoidance gap Q3 for the first conductive structure 80 and the second conductive structure 90 to pass through is formed between two adjacent battery monitoring modules 50, such that the risk of interference of the first conductive structure 80 and the second conductive structure 90 to the battery monitoring modules 50 can be reduced, and the stability of electric energy transmission and the reliability of the battery apparatus 100 are improved.

As shown in FIG. 17 and FIG. 18, in some embodiments, the first connector 42 is a male joint, the second connector 51 is a female joint, and the first connector 42 is inserted into the second connector 51.

The female joint provides an inserting hole for the male joint to insert, that is, the first connector 42 is inserted into the inserting hole of the second connector 51.

As the first connector 42 is the male joint, the second connector 51 is the female joint, the first connector 42 is inserted into the second connector 51, thus facilitating electrical connection between the first connector 42 and the second connector 51.

Definitely, in some other embodiments, the second connector 51 can be the male joint, the first connector 42 can be the female joint, and the second connector 51 is inserted into the first connector 42.

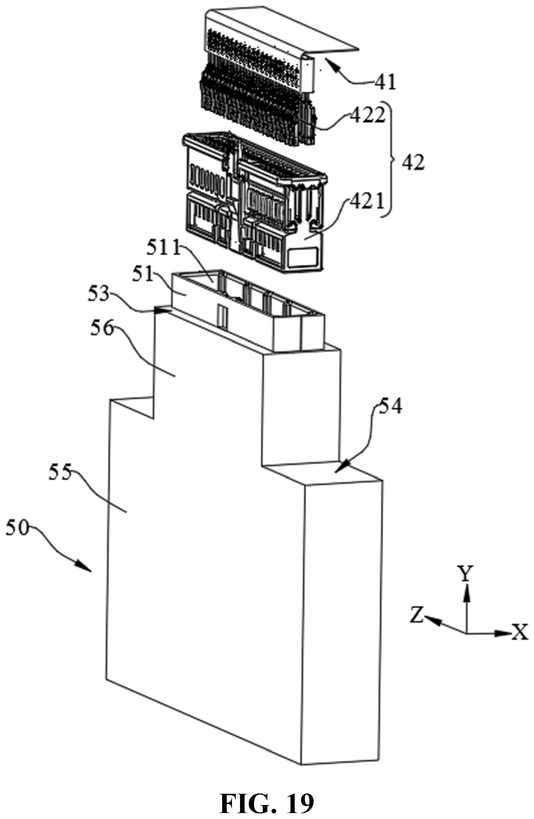

The first connector 42 and the wiring harness group 41 can be connected in various forms, such as shown in FIG. 19 to FIG. 21; and in some embodiments, the first connector 42 and the wiring harness group 41 are in compression joint.

The wiring harness group 41 includes an insulating plate 413 and wires 414; part of the wires 414 are embedded in the insulating plate 413, and the other part of the wires 414 are exposed out of the insulating plate 413.

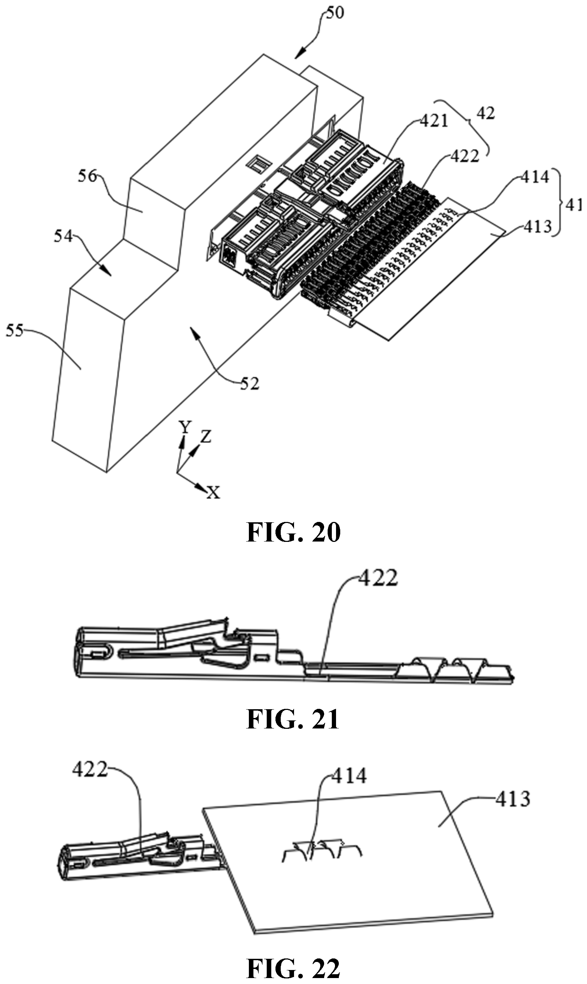

As shown in FIG. 20 and FIG. 21, the first connector 42 includes an insertion part 421 and a connection terminal 422; the insertion part 421 is connected to the connection terminal 422; and the insertion part 421 is in insertion fit with the second connector 51.

As shown in FIG. 22, after the connection terminal 422 can puncture the insulating plate 413, the connection terminal 422 is bent through an external force so as to encircle the wires 414 exposed out of the insulating plate 413, thus realizing compression joint between the first connector 42 and the wiring harness group 41.

Each first connector 42 can include one connection terminal 422 or a plurality of connection terminals 422. In an embodiment that the first connector 42 includes the plurality of connection terminals 422, the wiring harness group 41 can include a plurality of wires 414, and each connection terminal 422 can encircle one wire 414 or a plurality of wires 414.

In the embodiments, the connection terminal 422 includes, but is not limited to, puncturing terminals.

The first connector 42 is in compression joint with the wiring harness group 41, thus the connection between the first connector 42 and the wiring harness group 41 is facilitated, and a relatively stable and reliable connection relationship is realized between the first connector 42 and the wiring harness group 41. The first connector 42 is in compression joint with the wiring harness group 41, which makes the connection more environment-friendly and low in cost.

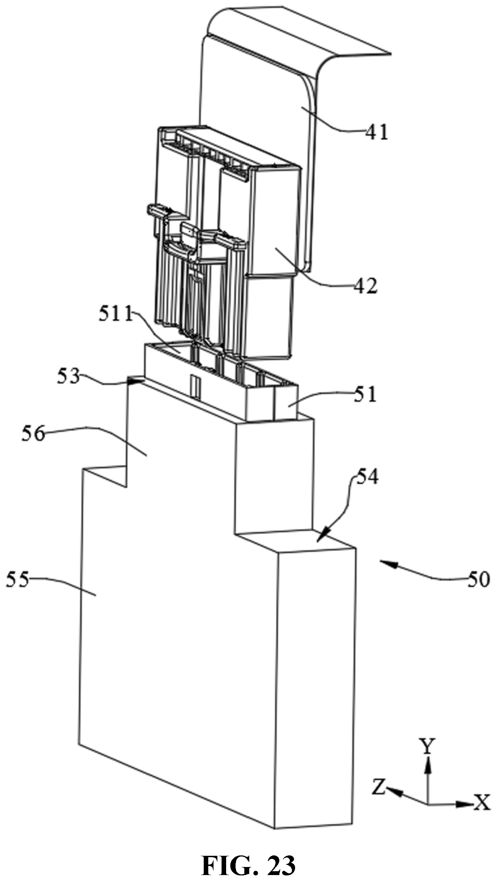

As shown in FIG. 23, in some other embodiments, the first connector 42 is in welding connection with the wiring harness group 41.

The connection terminal 422 of the first connector 42 is welded with the parts of the wires 414 exposed out of the insulating plate 413. The welding mode can be laser welding, ultrasonic welding, and the like.

The first connector 42 is in welding connection with the wiring harness group 41, thus the connection between the first connector 42 and the wiring harness group 41 has relatively good stability, the integrity of the first connector 42 and the wiring harness group 41 is good, and a relatively large external force can be borne.

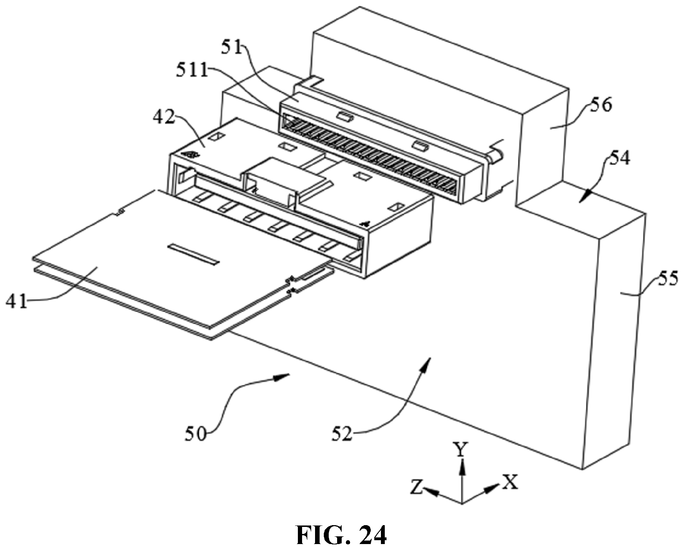

In some other embodiments, as shown in FIG. 24, the first connector 42 is in insertion fit with the wiring harness group 41.

One end of the first connector 42 is in insertion fit with the second connector 51, and the other end of the first connector 42 is in insertion fit with the wiring harness group 41.

The first connector 42 is in insertion fit with the wiring harness group 41, so that the connection between the first connector 42 and the wiring harness group 41 is simple and convenient.

The insertion part 421 and the connection terminal 422 can be detachably connected or fixedly connected.

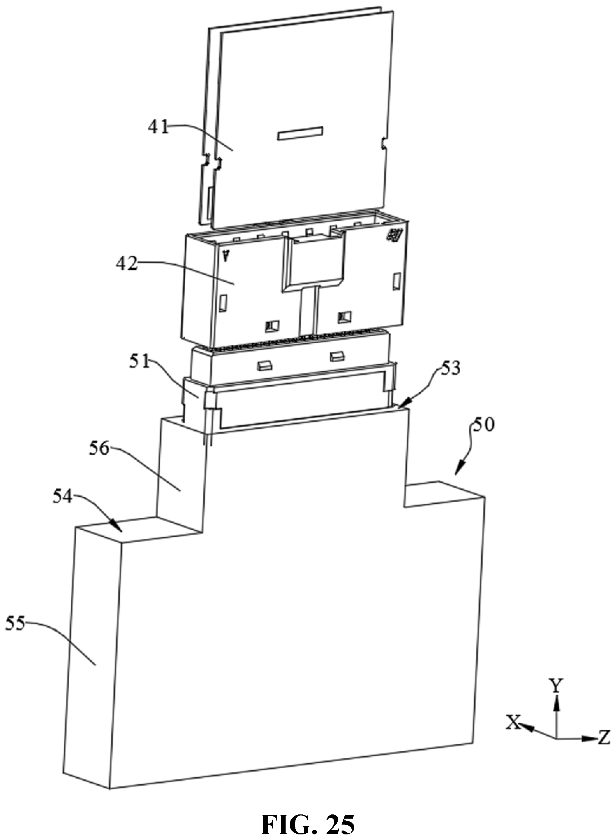

As shown in FIG. 24 and FIG. 25, in some embodiments, the first connector 42 includes the insertion part 421 and the connection terminal 422, the connection terminal 422 is connected to the wiring harness group 41, and both ends of the insertion part 421 are in insertion fit with the connection terminal 422 and the second connector 51, respectively.

In the embodiments, one end of the insertion part 421 is inserted into the inserting hole of the second connector 51, and the inserting hole for the connection terminal 422 to be inserted is formed in the other end of the insertion part 421.

Two ends of the insertion part 421 are in insertion fit with the connection terminal 422 and the second connector 51, respectively, thus facilitating the connection between a first connector 42 and the second connector 51, as well as the connection between the first connector 42 and the wiring harness group 41.

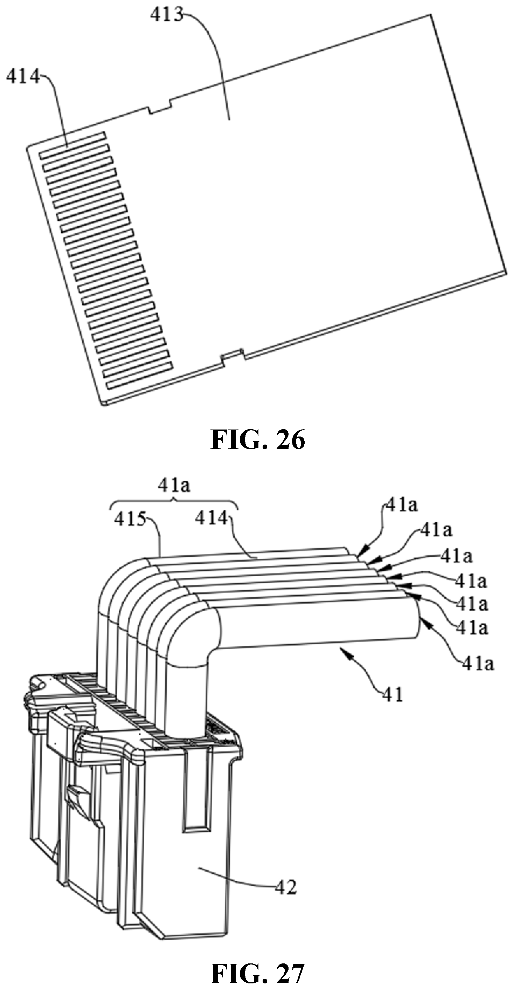

As shown in FIG. 26, in some embodiments, the wiring harness group 41 includes the insulating plate 413 and the plurality of wires 414; part of each wire 414 is buried in the insulating plate 413, and the other part of each wire 414 is exposed out of the insulating plate 413 and is connected to the first connector 42; the signal acquisition assembly 40 includes a plurality of acquisition members 43; and each acquisition member 43 is connected to at least one wire 414.

In the embodiments, the connection terminal 422 of the first connector 42 and the parts of the wiring harness group 41 exposing out of the insulating plate 413 can be in compression joint connection, welding connection, and insertion connection.

Part of each wire 414 is buried in the insulating plate 413, and the other part of each wire 414 is exposed out of the insulating plate 413 and is connected to the first connector 42, such that the risk of information acquisition failure caused by mutual winding of the wires 414 is reduced, and moreover, the wires 414 are separated by the insulating plate 413, thereby reducing the risk of short circuit, and improving the reliability of the battery apparatus 100.

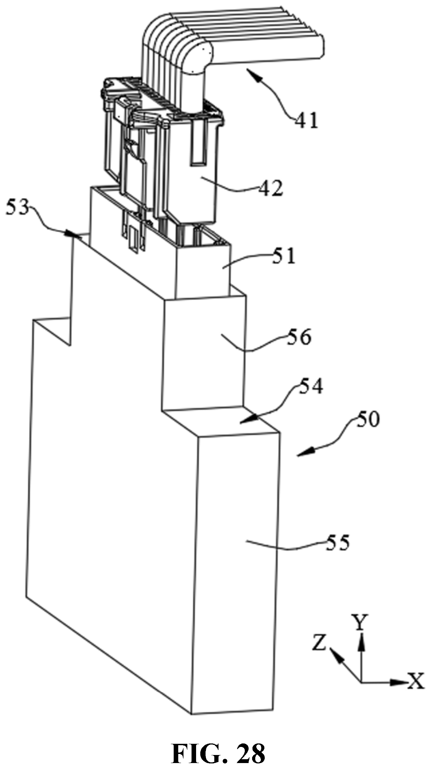

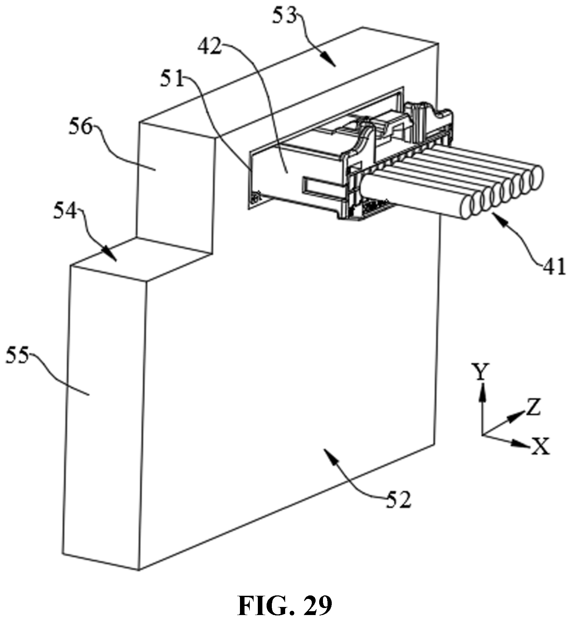

As shown in FIG. 27 to FIG. 29, in some embodiments, the wiring harness group 41 includes the insulating layers 415 and the plurality of wires 414, and each insulating layer 415 covers the periphery of at least one wire 414; the signal acquisition assembly 40 includes the plurality of acquisition members 43; both ends of each wire 414 are connected to the acquisition members 43 and the first connector 42, respectively; and each acquisition member 43 is connected to at least one wire 414.

The insulating layers 415 cover the periphery of at least one wire 414 to form a columnar structure 41a. The wiring harness group 41 can include one columnar structure 41a or a plurality of columnar structures 41a.

The columnar structure 41a and the first connector 42 can be integrally formed, or are conductively connected by welding.

Each insulation layer 415 covers the periphery of at least one lead wire 414, so that the wires 414 are separated by the insulating layers 415, the risk of short circuit is reduced, and the reliability of the battery apparatus 100 is improved.

As shown in FIG. 3, in some embodiments, the battery apparatus 100 includes a plurality of battery cell assemblies 20 which are arranged along the third direction Z, and the first direction X intersects with the third direction Z; and each battery cell assembly 20 is correspondingly provided with one signal acquisition assembly 40.

The battery apparatus 100 includes the plurality of battery cell assemblies 20, the battery apparatus 100 is correspondingly provided with the plurality of signal acquisition assemblies 40, and the battery cell assemblies 20 and the signal acquisition assemblies 40 can be arranged one by one.

The battery apparatus 100 is provided with the plurality of battery cell assemblies 20, so that the energy density of the battery apparatus 100 is high. Each battery cell assembly 20 is correspondingly provided with one signal acquisition assembly 40, thus the information of the battery cell 21 of each battery cell assembly 20 can be conveniently acquired, and the information of the battery cell 21 can be accurately and timely acquired, thereby providing reliable reference data for ensuring the reliability of the battery apparatus 100.

The embodiment of the present application also provides an electrical apparatus, which includes the battery apparatus 100 provided by any embodiment above.

The battery apparatus 100 provided by any embodiment above has good reliability, and can improve the power utilization reliability of the electrical apparatus powered by the battery apparatus 100.

The embodiment of the present invention provides the battery apparatus 100, which includes the box 10, the plurality of battery cell assemblies 20, the plurality of signal acquisition assemblies 40, and the plurality of battery monitoring modules 50.

The box 10 includes the box bottom wall 121 which supports the battery cell assemblies 20 along the second direction Y. The box 10 is provided with the partition beam 60; the partition beam 60 is arranged in the box 10 and is connected to the box 10; the partition beam 60 partitions the space in the box 10 into the first space Q1 and the second space Q2 which are arranged along the first direction X; the battery monitoring modules 50 and the battery cell assemblies 20 are arranged in the first space Q1 and the second space Q2, respectively; and the plurality of battery monitoring modules 50 and the plurality of battery cell assemblies 20 are located in the first space Q1 and the second space Q2, respectively.

Each battery cell assembly 20 includes a plurality of battery cells 21 which are arranged along the first direction X.

The plurality of battery cell assemblies 20 are arranged along the third direction Z; the plurality of signal acquisition assemblies 40 are arranged along the third direction Z; and the plurality of battery monitoring modules 50 are arranged along the third direction Z. The signal acquisition assemblies 40 and the battery cell assemblies 20 are arranged one by one.

Each signal acquisition assembly 40 includes the acquisition member 43, the wiring harness group 41, and the first connector 42; each wiring harness group 41 is connected to the acquisition unit and the corresponding first connector 42; and the acquisition unit of each signal acquisition assembly 40 is configured to acquire the information of the battery cells 21 of the corresponding battery cell assembly 20.

Each battery monitoring module 50 is provided with the second connector 51; part of the battery monitoring modules 50 are provided with one second connector 51, and the other part of the battery monitoring modules 50 are provided with a plurality of second connectors 51; and the plurality of second connectors 51 are arranged at intervals along the third direction Z.

The second connector 51 includes the first part 55 and the second part 56; the first part 55 is arranged on the box bottom wall 121; along the second direction Y, the second part 56 is connected to the surface of the first part 55 deviating from the box bottom wall 121 and protrudes out of the surface of the first part 55 deviating from the box bottom wall 121; the second connector 51 is arranged at the second part 56.

The second connector 51 includes the inserting hole for the first connector 42 to be inserted. The first connector 42 and the second connector 51 are both arranged at the side of each battery single assembly 20 facing the corresponding battery monitoring module 50 along the first direction X.

In some embodiments, the second connector 51 is arranged on the surface of the second part 56 of each battery monitoring module 50 facing the corresponding battery single assembly 20 along the first direction X; the first connector 42 and the second connector 51 are arranged between each battery single assembly 20 and the corresponding battery monitoring module 50; and the insertion direction of the first connector 42 and the second connector 51 is parallel to the first direction X.

In some other embodiments, the second connector 51 is arranged on the surface of the second part 56 of each battery monitoring module 50 deviating from the box bottom wall 121 along the second direction Y; and the insertion direction of the first connector 42 and the second connector 51 is parallel to the second direction Y.

The first direction X, the second direction Y and the third direction Z are vertical to each other.

It is to be noted that, without conflict, the embodiments in the present application and the features in the embodiments may be combined with each other.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery apparatus, comprising:
a battery cell assembly which comprises a plurality of battery cells arranged along a first direction;
a signal acquisition assembly which is configured to acquire information of the battery cells of the battery cell assembly, the signal acquisition assembly comprising a wiring harness group and a first connector, and the first connector being connected to one end of the wiring harness group; and
a battery monitoring module which is provided with a second connector, the second connector being in insertion fit with the first connector.

2. The battery apparatus according to claim 1, wherein the battery monitoring module and the battery cell assembly are arranged along the first direction; and along the first direction, the first connector and the second connector are positioned on a side of the battery cell assembly facing the battery monitoring module.

3. The battery apparatus according to claim 2, wherein along the first direction, the second connector is arranged on a side of the battery monitoring module facing the battery cell assembly.

4. The battery apparatus according to claim 3, wherein along the first direction, at least part of the first connector is located between the battery monitoring module and the battery cell assembly; and
in a projection plane perpendicular to the first direction, at least part of an orthographic projection of the first connector overlaps with at least part of the orthographic projections of the battery cells.

5. The battery apparatus according to claim 3 or 4, wherein an insertion direction of the first connector and the second connector is parallel to the first direction.

6. The battery apparatus according to claim 2, comprising a box, wherein the battery cell assembly is accommodated in the box; the box comprises a box bottom wall, the box bottom wall supports the battery cell assembly along a second direction, and the second direction intersects with the first direction; and
along the second direction, the second connector is arranged on a side of the battery monitoring module deviating from the box bottom wall.

7. The battery apparatus according to claim 6, wherein the battery cell comprises a shell and an electrode assembly; the electrode assembly is accommodated in the shell; and along the second direction, the shell is provided with a first surface deviating from the box bottom wall, and the battery monitoring module does not exceed the first surface along a direction deviating from the box bottom wall.

8. The battery apparatus according to claim 6 or 7, wherein the insertion direction of the first connector and the second connector is parallel to the second direction.

9. The battery apparatus according to any one of claims 1 to 8, comprising the box, wherein the battery cell assembly is accommodated in the box; the box comprises the box bottom wall; the box bottom wall supports the battery cell assembly along the second direction; the battery monitoring module is arranged on the box bottom wall; and the second direction intersects with the first direction.

10. The battery apparatus according to claim 9, wherein the battery monitoring module and the battery cell assembly are arranged along the first direction; the wiring harness group comprises a main body region and a connection region; the main body region is arranged on the side of the battery cell assembly deviating from the box bottom wall, and extends along the first direction; and the connection region exceeds the surface of the battery cell assembly facing the battery monitoring module along the first direction, and is connected to the first connector.

11. The battery apparatus according to claim 9 or 10, further comprising a partition beam, wherein the partition beam is arranged in the box and connected to the box; the partition beam partitions the space in the box into a first space and a second space which are arranged along the first direction; and the battery monitoring module and the battery cell assembly are arranged in the first space and the second space, respectively.

12. The battery apparatus according to any one of claims 9 to 11, further comprising a locking member, wherein the locking member is configured to lock the battery monitoring module on the box bottom wall.

13. The battery apparatus according to claim 12, wherein along the second direction, the battery monitoring module is provided with a second surface deviating from the box bottom wall, and the locking member is pressed on the second surface to lock the battery monitoring module to the box bottom wall.

14. The battery apparatus according to claim 12 or 13, wherein each battery monitoring module is correspondingly provided with two locking members, and the two locking members are arranged at an interval along a third direction; and the first direction and the second direction intersect with the third direction.

15. The battery apparatus according to any one of claims 9 to 14, wherein the battery monitoring module comprises a first part and a second part; the first part is arranged on the box bottom wall; along the second direction, the surface of the first part deviating from the box bottom wall is the second surface; and the second part is connected to the second surface and protrudes out of the second surface, and the second connector is arranged on the second part.

16. The battery apparatus according to claim 15, wherein along the third direction, the second surface protrudes from both ends of the second part, and the first direction and the second direction intersect with the third direction.

17. The battery apparatus according to any one of claims 1 to 16, comprising a plurality of signal acquisition assemblies which are arranged along the third direction, wherein the third direction intersects with the first direction; and
each battery monitoring module is arranged corresponding to at least one signal acquisition assembly.

18. The battery apparatus according to claim 17, comprising a plurality of battery monitoring modules which are arranged along the third direction, wherein the first direction intersects with the third direction.

19. The battery apparatus according to claim 18, wherein at least one battery monitoring module is provided with a plurality of second connectors, and each second connector is in insertion fit with the first connector of one signal acquisition assembly.

20. The battery apparatus according to claim 18, wherein at least one battery monitoring module is provided with one second connector, and one second connector is in insertion fit with the first connector of one signal acquisition assembly.

21. The battery apparatus according to any one of claims 18 to 20, wherein the at least one battery cell assembly comprises a positive electrode conveying part and a negative electrode conveying part;
the battery apparatus further comprises the box, a first conductive structure, and a second conductive structure; the battery cell assembly is arranged in the box, the box is provided with a positive electrode lead-out part and a negative electrode lead-out part, the positive electrode lead-out part is connected to the positive electrode conveying part through the first conductive structure, and the negative electrode lead-out part is connected to the negative electrode conveying part through the second conductive structure; and an avoidance gap for the first conductive structure and the second conductive structure to pass through is formed between two adjacent battery monitoring modules.

22. The battery apparatus according to any one of claims 1 to 21, wherein the first connector is a male joint, the second connector is a female joint, and the first connector is inserted into the second connector.

23. The battery apparatus according to any one of claims 1 to 22, wherein the first connector is in compression joint with the wiring harness group.

24. The battery apparatus according to any one of claims 1 to 22, wherein the first connector is in welding connection with the wiring harness group.

25. The battery apparatus according to any one of claims 1 to 22, wherein the first connector is in insertion fit with the wiring harness group.

26. The battery apparatus according to any one of claims 1 to 25, wherein the first connector comprises an insertion part and a connection terminal, the connection terminal is connected to the wiring harness group, and both ends of the insertion part are in insertion fit with the connection terminal and the second connector, respectively.

27. The battery apparatus according to any one of claims 1 to 26, wherein the wiring harness group comprises an insulating plate and a plurality of wires; one part of each wire is buried in the insulating plate, and the other part of each wire is exposed out of the insulating plate and is connected to the first connector; and
the signal acquisition assembly comprises a plurality of acquisition members, and each acquisition member is connected to at least one wire.

28. The battery apparatus according to any one of claims 1 to 26, wherein the wiring harness group comprises insulating layers and the plurality of wires, and each insulating layer coats the periphery of at least one wire;
the signal acquisition assembly comprises the plurality of acquisition members, and both ends of the wires are respectively connected to the acquisition members and the first connector; and each acquisition member is connected to at least one wire.

29. The battery apparatus according to any one of claims 1 to 28, comprising a plurality of battery cell assemblies which are arranged along the third direction, wherein the first direction intersects with the third direction; and each battery cell assembly is correspondingly provided with one signal acquisition assembly.

30. An electrical apparatus, comprising the battery apparatus according to any one of claims 1 to 29.
